(19) Europäisches Patentamt
European Patent Office
Office européen des brevets

(11) Publication number : **0 553 887 A2**

(12) # EUROPEAN PATENT APPLICATION

(21) Application number : **93102597.7**

(22) Date of filing : **06.02.89**

(51) Int. Cl.$^5$ : **C08G 59/72**, C08G 59/62, C08G 59/68

This application was filed on 19 - 02 - 1993 as a divisional application to the application mentioned under INID code 60.

(30) Priority : **12.02.88 US 155381**
**18.11.88 US 274250**
**18.11.88 US 274227**

(43) Date of publication of application :
**04.08.93 Bulletin 93/31**

(60) Publication number of the earlier application in accordance with Art. 76 EPC : **0 328 020**

(84) Designated Contracting States :
**AT BE CH DE ES FR GB GR IT LI NL SE**

(71) Applicant : **THE DOW CHEMICAL COMPANY**
**2030 Dow Center Abbott Road P.O. Box 1967**
**Midland Michigan 48640-1967 (US)**

(72) Inventor : **Bertram, James L.**
**115 Southern Oaks Drive**
**Lake Jackson, Texas 77566 (US)**
Inventor : **Walker, Louis L.**
**246 Barbara Drive**
**Clute, Texas 77531 (US)**
Inventor : **Muskopf, John W.**
**119 Mistletoe**
**Lake Jackson, Texas 77566 (US)**

(74) Representative : **Sternagel, Hans-Günther, Dr. et al**
**Patentanwälte Dr. Michael Hann Dr. H.-G. Sternagel Sander Aue 30**
**W-5060 Bergisch Gladbach 2 (DE)**

(54) **Catalysts and epoxy resin composition containing the same.**

(57) Storage stable compositions are disclosed which comprise an epoxide containing compound, a phenolic hydroxyl containing compound, and a catalyst compound for catalyzing the reaction between epoxide groups and aromatic hydroxyl groups which catalyst comprises the product resulting from contacting an onium compound, non-heterocyclic amine compound, heterocyclic nitrogen compound or salt thereof with an acid or a salt of an acid having a weak nucleophilic anion.

EP 0 553 887 A2

The present invention concerns latent catalysts and epoxy resin compositions containing epoxy-containing compounds, aromatic hydroxyl-containing compounds and the latent catalysts.

Epoxy resins have been precatalyzed with phosphonium and other compounds to provide latent compositions which form advanced, higher molecular weight epoxy resins when admixed with an aromatic hydroxyl-containing compound as disclosed by Perry in U.S. Patent 3,948,855 and Canadian Patent 893,191; by Dante et al. in U.S. Patent 3,477,990; by Mueller et al. in U.S. Patent 3,547,881; by Tyler, Jr. et al. in U.S. Patent 4,366,295; and by Cragar in Canadian Patent 858,648.

While compositions containing these catalysts and an epoxy resin are somewhat stable, such compositions which also contain an aromatic hydroxyl-containing compound are lacking in stability.

Curable compositions containing epoxy resins and aromatic hydroxyl-containing compounds and a catalyst therefor would be highly desirable in the preparation of storage stable coatings, storage stable electrical encapsulants, storage stable formulations for preparing mechanical and electrical laminates and composites, storage stable one package molding compositions, storage stable curable compositions for use in resin transfer molding (RTM) and reaction injection molding (RIM) applications and the like.

The present invention pertains to a composition comprising (A) at least one compound containing an average of more than one epoxide group per molecule; (B) at least one compound containing an average of more than one aromatic hydroxyl group per molecule other than an alkenylphenol polymer; and (C) a catalytic quantity of the product resulting from contacting

(1) at least one compound selected from
  (a) an onium compound of the element nitrogen, phosphorus, sulfur or arsenic,
  (b) a non-heterocyclic amine comound or an acid adduct thereof and
  (c) a heterocyclic nitrogen-containing compound or an acid adduct therof, with
(2) at least one compound selected from
  (a) an inorganic acid free of boron or a metal salt thereof, said inorganic acid having a weak-nucleophilic anion,
  (b) an inorganic acid containing boron or a metal salt thereof, said inorganic acid being represented by the formula $BR_3R'$ wherein each R is independently hydrogen or an aliphatic, cycloaliphatic or aromatic hydrocarbyl group having from 1 to 12 carbon atoms or a halogen and R' is a group other than a hydrocarbyl group, and
  (c) any combination of components (a) or (b);

wherein
  (i) components (C-1) and (C-2) are contacted in quantities which permit the composition to satisfy the viscosity requirements of the composition after storage at 50°C for 14 days;
  (ii) components (A) and (B) are present in quantities which provide a ratio of aromatic hydroxyl groups to epoxide group of from 0.05:1 to 20:1; and
  (iii) a mixture of components (A), (B), and (C), when dissolved in 20 to 40 percent by weight of a suitable solvent or solvent mixture has a viscosity measured at 25°C of 75 percent or less than the viscosity of a like composition except that the catalyst consists only of component (C-1), said viscosity being determined after storage for 14 days at 50°C.

The present invention also pertains to a catalyst resulting from contacting (1) at least one heterocyclic nitrogen-containing compound other than pyridine or an acid adduct thereof with (2) at least one compound selected from (a) an inorganic acid free of boron or a metal salt thereof, said inorganic acid having a weak-nucleophilic anion, (b) an inorganic acid containing boron or a metal salt thereof, said inorganic acid being represented by the formula $BR_3R'$ wherein each R is independently hydrogen or an aliphatic, cycloaliphatic or aromatic hydrocarbyl group having from 1 to 12 carbon atoms or a halogen and R' is a a group other than a hydrocarbyl group, and (c) any combination of components (a) or (b).

The acid adducts used in the present invention preferably have a relatively strong-nucleophilic anion. The acid adducts are reacted with the metal salts of the inorganic acids. The term weak-nucleophilic as employed herein means that the material has a nucleophilicity value "n" from zero to less than 2.5 as described by C. G. Swain and C. B. Scott in J. Am. Chem. Soc., Vol. 75, p. 141 (1953). The term relatively strong-nucleophilic as employed herein means that the material has a nucleophilicity value "n" of 2.5 or greater as described by C. G. Swain and C. B. Scott in J. Am. Chem. Soc., Vol. 75, p. 141 (1953).

## Preparation of the Catalysts

The catalysts employed in the present invention are prepared by simply mixing in the desired proportions and stirring to insure intimate contact the onium, amine or nitrogen-containing compound with the acid or salt of an acid having a weak-nucleophilic anion and which acid or acid salt is free of any organic substituent. The

contact can be conducted at temperatures of from 0°C to 100°C, preferably from 20°C to 60°C for a time sufficient to complete any reaction which occurs. The time depends upon the temperature, but usually from 1 to 120, preferably from 5 to 60 minutes is sufficient.

The components from which the catalysts are prepared are mixed in proportions which provide from 0.6 to 1.4, suitably from 0.75 to 1.12, more suitably from 0.85 to 1.35, most suitably from 0.93 to 1.1 moles of acid per mole of onium, amine or heterocyclic nitrogen-containing compound. The preferred ratios depend upon which onium, amine or heterocyclic amine compound is mixed with the acid or acid salt. For example, the preferred ratio of moles of acid or acid salt per mole of imidazole compound is from 0.85:1 to 1.12:1 while the most preferred ratio is in the range of from 0.93:1 to 1.1:1. For phosphonium compounds, the preferred ratio is from 0.95:1 to 1.35:1, more preferably from 1.1:1 to 1.25:1 moles of acid per mole of phosphonium compound. For other catalysts, it is easy to determine the optimum ratios of acid or acid salt to onium, amine or heterocyclic amine compound by mixing the components together in various ratios and conducting simple, routine experiments such as those described in Examples 1-9, 18-26 and 39-45. When the amount of acid or acid salt is less than 0.6 mole per mole of imidazole the catalyst is less latent and begins to approach the reactivity of the original imidazole prior to reaction with the acid or acid salt. When the amount of acid or acid salt is more than 1.4 moles per mole of phosphonium, the catalyst becomes less latent to the point that at a ratio of 1.5:1 the catalyst becomes an accelerator as compared to the original onium-containing compound prior to reaction with the acid. When the amount of acid or acid salt is more than 1.14 moles per mole of imidazole, the catalyst becomes less latent to the point that at a ratio of 1.17:1 the catalyst becomes an accelerator as compared to the original imidazole compound prior to reaction with the acid or acid salt.

The catalyst is employed in amounts sufficient to catalyze the reaction between components (A) and (B) when heated to a temperature of at least 75°C. In most instances, the quantity of catalyst is from 0.05 to 100, suitably from 0.1 to 50, more suitably from 0.1 to 30, more suitably from 0.5 to 20, most suitably from 1 to 10 millimoles of catalyst per epoxide equivalent.

Catalytic Components

Suitable onium compounds which can be employed herein include, ammonium, phosphonium, sulfonium and arsonium compounds. Particularly suitable such compounds include, those represented by the following formulas IA or IB

Formula IA.

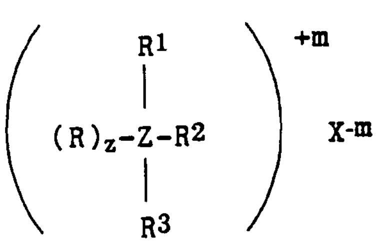

Formula IB.

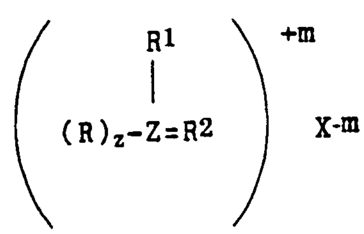

wherein each R, $R^1$, $R^2$ and $R^3$ is independently a hydrocarbyl group having from 1 to 18, preferably from 1 to 9, carbon atoms, or a hydrocarbyl group having from 1 to 18, preferably from 1 to 9, carbon atoms which group also contains one or more oxygen, sulfur, halogen, or nitrogen atoms or two of such R, $R^1$, $R^2$ and $R^3$ groups can combine to form a heterocyclic ring containing one or more atoms other than carbon atoms; each X is the anion portion of an acid of a relatively strong nucleophilic acid; Z is phosphorus, nitrogen, sulfur or arsenic; m has a value equal to the valence of the anion X; and z has a value of zero or 1 depending on the valence of Z. Particularly suitable onium or amine compounds which can be reacted or complexed with the inorganic acids having a weak-nucleophilic anion to form the catalysts of the present invention include, for example, ethyltriphenyl phosphonium acetate, ethyltriphenyl phosphonium acetate.acetic acid complex, tetrabutyl phosphonium acetate, tetrabutyl phosphonium acetate·acetic acid complex, ethyltriphenyl phosphonium chloride, ethyl triphenyl phosphonium iodide, tetrabutyl phosphonium chloride, tetrabutyl phosphonium iodide, tetrabutylphosphonium hydroxide, tetrabutylammonium hydroxide, tetraethylammonium hydroxide, tetramethylammonium hydroxide, N-methylmorpholine, 2-methylimidazole, triethylamine, N,N,N',N'-tetramethylethylenediamine, ethyltri(2-hydroxyethyl)-ammonium hydroxide, ethyltri(2-ethoxyethyl)ammonium hydroxide, triethyl(2-thioethylethyl)ammonium hydroxide, N-methyl-N-methylenemethanaminium acetate, N-methyl-N-methylenemethanaminium acetate·acetic acid complex, N-methyl-N-methylenemethanaminium chloride, N-methyl-N-methylenemethanaminium iodide, N-methylpyridinium acetate, N-methylpyridinium acetate·acetic acid complex, N-methylpyridinium chloride, N-methylpyridinium iodide, 1-ethyl-2,3-dimethylimidazolium acetate, 1-ethyl-2,3-dimethylimidazolium acetate·acetic acid complex, 1-ethyl-2,3-dimethylimidazolium chloride, 1-ethyl-2,3-dimethylimidazolium iodide, N-methylquinolinium acetate, N-methylquinolinium acetate·acetic acid complex, N-methylquinolinium chloride, N-methylquinolinium iodide, N-mettiyl-1,3,5-triazinium acetate, N-methyl-1,3,5-triazinium acetate·acetic acid complex, N-methyl-1,3,5-triazinium chloride, N-methyl-1,3,5-triazinium iodide, and combinations thereof.

Suitable relatively strong-nucleophilic acid anions include, for example, carboxylates, halides, phosphates, phosphites, carbonates, bicarbonates, hydroxide, cyanide, thiol, sulfate, and thiosulfate. Particularly suitable such nucleophilic acid anions include, for example, acetate, acetate·acetic acid complex, propionate, chloride, and iodide.

Particularly suitable onium or amine-acid complexes which can be reacted with the salt of inorganic acids having a weak-nucleophilic anion to form the catalysts employed in the present invention include, for example, tetrabutylphosphonium chloride, tetrabutylammonium chloride, tetraethylammonium chloride, tetramethylammonium chloride, triethylamine hydrochloride, 2-methylimidazole hydrochloride, N-methylmorpholine hydrochloride, ethyltri(2-hydroxyethyl)ammonium chloride, triethyl(2-thioethylethyl)ammonium chloride, and mixtures thereof.

The non-heterocyclic amine compounds which can be suitably employed herein include, for example, primary, secondary, tertiary, aliphatic, cycloaliphatic or aromatic amines.

Suitable non-heterocyclic amines which can be employed herein include those containing suitably from 1 to 60, more suitably from 2 to 27, most suitably from 2 to 18, carbon atoms. Particularly suitable such amines include, for example, ethylamine, diethylamine, triethylamine, n-propylamine, di-n-propylamine, tri-n-propylamine, isopropylamine, diisopropylamine, triisopropylamine, butylamine, dibutylamine, tributylamine, methyldibutylamine, and combinations thereof.

Suitable heterocyclic nitrogen-containing compunds which can be employed herein include, for example, imidazoles, imidazolidines, imidazolines, oxazoles, pyrroles, thiazoles, pyridines, pyrazines, morpholines, pyridazines, pyrimidines, pyrrolidines, pyrazoles, quinoxalines, quinazolines, phthalozines, quinolines, purines, indazoles, indoles, indolazines, phenazines, phenarsazines, phenothiazines, pyrrolines, indolines, piperidines, piperazines, and combinations thereof.

Suitable imidazole compounds which can be employed herein include, for example, those represented by the following formula I

Formula I.

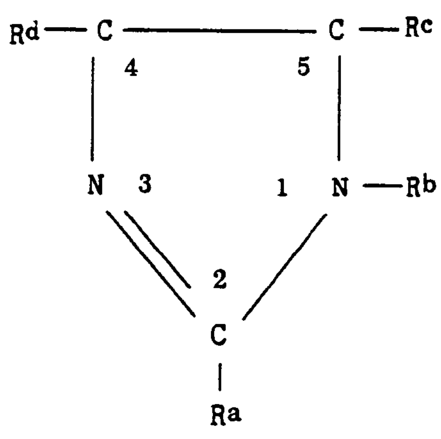

wherein each $R^a$, $R^b$, $R^c$ and $R^d$ is independently hydrogen, halogen, cyano or a hydrocarbyl group having suitably from 1 to 18, more suitably from 2 to 9, carbon atoms or such hydrocarbyl groups containing an oxygen, sulfur or halogen or the like substitutent, or $R^b$ and $R^c$ can combine to form a 5 or 6 membered ring with the carbon and nitrogen atoms from the imidazole ring to which they are attached or $R^c$ and $R^d$ can combine to form a 5 or 6 membered ring with the two carbon atoms from the imidazole ring to which they are attached. Particularly suitable imidazole compounds include, for example, 2-methylimidazole, 2-ethylimidazole, 2-propylimidazole, 2-butylimidazole, 2-pentylimidazole, 2-hexylimidazole, 2-cyclohexylimidazole, 2-phenylimidazole, 2-nonylimidazole, 2-undecylimidazole, 2-heptadecylimidazole, 2-ethyl-4-methylimidazole, 2-phenyl-4-methylimidazole, 1-benzylimidazole, 1-ethyl-2-methylbenzimidazole, 2-methyl-5,6-benzimidazole, 1-vinylimidazole, 1-allyl-2-methylimidazole, 2-cyanoimidazole, 2-chloroimidazole, 2-bromoimidazole, and combinations thereof. Suitable imidazoles wherein one or more of the $R^a$, $R^b$, $R^c$, or $R^d$ group contain oxygen, sulfur or halogen or the like substitutents include, for example, 1-(2-hydroxypropyl)-2-methylimidazole, 2-phenyl-4,5-dimethylolimidazole, 2-phenyl-4-methyl-5-hydroxymethylimidazole, 2-chloromethylbenzimidazole, 2-hydroxybenzimidazole, and any combination thereof. Most particularly suitable are 2-methylimidazole, 2-ethyl-4-methylimidazole, 1,2-dimethylimidazole and 2-phenylimidazole.

Suitable pyrazole compounds which can be employed herein include, for example, those represented by the following formula II

Formula II.

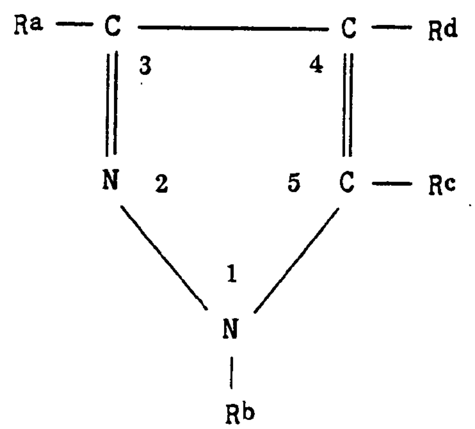

wherein each $R^a$, $R^b$, $R^c$ and $R^d$ is independently hydrogen, halogen, cyano or a hydrocarbyl group having suitably from 1 to 18, more suitably from 1 to 9, carbon atoms or such hydrocarbyl groups containing an oxygen, sulfur, cyano or halogen or the like substituent, or $R^b$ and $R^c$ can combine to form a 5 or 6 membered ring with the carbon and nitrogen atoms from the pyrazole ring to which they are attached or $R^c$ and $R^d$ can combine to form a 5 or 6 membered ring with the two carbon atoms from the pyrazole ring to which they are attached. Particularly suitable pyrazole compounds include, for example, pyrazole, 1-methylpyrazole, 3-methylpyrazole, 4-butylpyrazole, 1-methyl-3-propylpyrazole, 3-ethyl-5-methylpyrazole, 1-(3-hydroxypropyl)pyrazole, 5-phenylpyrazole, 5-benzylpyrazole, 1-phenyl-3-methylpyrazole, 1-cyanopyrazole, 3-chloropyrazole, 4-bromo-1-methylpyrazole, and any combination thereof.

Suitable oxazole compounds which can be employed herein include, for example, those represented by the following formula III

Formula III.

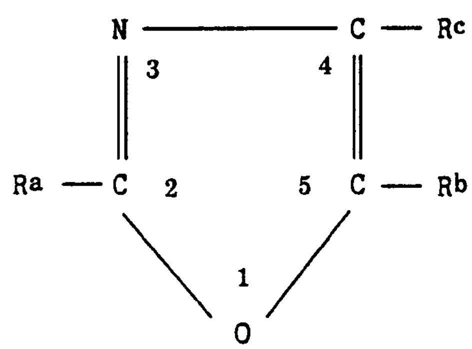

wherein each $R^a$, $R^b$, and $R^c$ is independently hydrogen, halogen, cyano or a hydrocarbyl group having suitably from 1 to 18, more suitably from 1 to 9, carbon atoms or such hydrocarbyl groups containing an oxygen, sulfur, cyano or halogen or the like substitutent. Particularly suitable oxazole compounds include, for example, oxazole, 4-methyloxazole, 2-methyloxazole, 4-butyloxazole, 2-methyl-5-propyloxazole, 2-ethyl-4-methyloxazole, 2-(3-hydroxypropyl)oxazole, 4-phenyloxazole, 5-benzyloxazole, 2-phenyl-5-methyloxazole, 2-cyanooxazole, 4-chlorooxazole, 4-bromo-2-methyloxazole, and any combination thereof.

Suitable imidazolidine compounds which can be employed herein include, for example, those represented by the following formula IV

Formula IV.

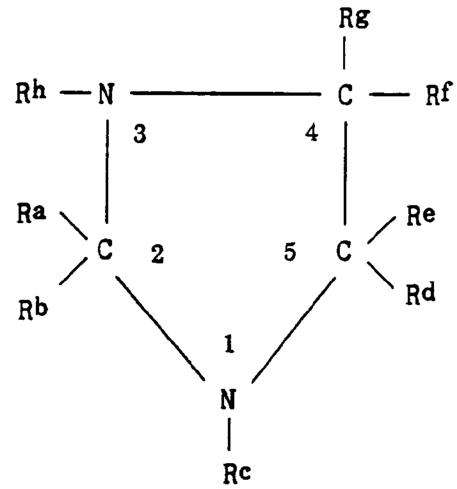

wherein each $R^a$, $R^b$, $R^c$, $R^d$, $R^e$, $R^f$, $R^g$ and $R^h$ is independently hydrogen, halogen, cyano or a hydrocarbyl group having suitably from 1 to 18, more suitably from 1 to 9, carbon atoms or such hydrocarbyl groups containing an oxygen, sulfur, cyano or halogen or the like substitutent. Particularly suitable imidazolidine compounds include, for example, imidazolidine, 1-methylimidazolidine, 2-methylimidazolidine, 4-butylimidazolidine, 1-methyl-3-propylimidazolidine, 1-ethyl-4-methyl-imidazolidine, 1-(3-hydroxypropyl)imidazolidine, 2-phenylimidazolidine, 1-benzylimidazolidine, 2-phenyl-1-methylimidazolidine, 4-cyanoimidazolidine, 4-chloroimidazolidine, 4-bromo-1-methylimidazolidine, and any combination thereof.

Suitable imidazoline compounds which can be employed herein include, for example, those represented by the following formula V

Formula V.

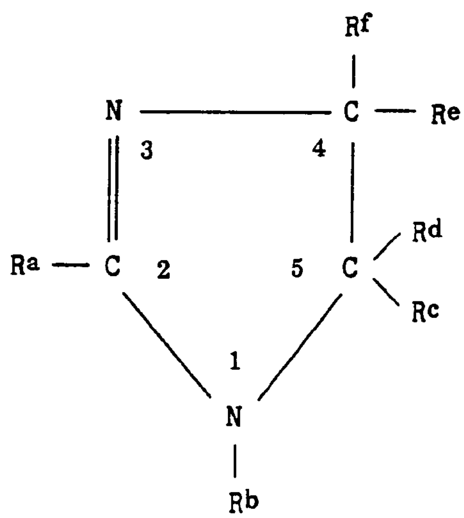

wherein each $R^a$, $R^b$, $R^c$, $R^d$, $R^e$ and $R^f$ is independently hydrogen, halogen, cyano or a hydrocarbyl group having suitably from 1 to 18, more suitably from 1 to 9, carbon atoms or such hydrocarbyl groups containing an oxygen, sulfur, cyano or halogen or the like substitutent. Particularly suitable imidazoline compounds include, for example, imidazoline, 1-methylimidazolidine, 2-methylimidazolidine, 4-butylimidazolidine, 1-methyl-2-propylimidazolidine, 1-ethyl-4-methylimidazolidine, 1-(3-hydroxypropyl)imidazolidine, 2-phenylimidazolidine, 1-benzylimidazolidine, 2-phenyl-1-methylimidazolidine, 4-cyanoimidazolidine, 5-chloroimidazolidine, 5-bromo-1-methylimidazolidine, and any combination thereof.

Suitable thiazole compounds which can be employed herein include, for example, those represented by the following formula VI

Formula VI.

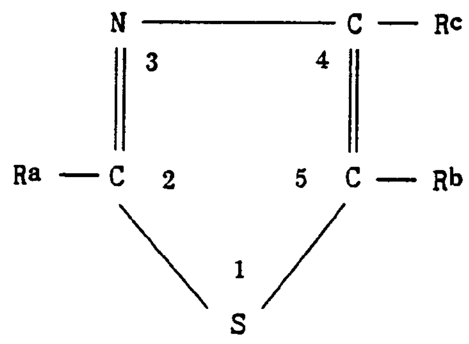

wherein each $R^a$, $R^b$, and $R^c$ is independently hydrogen, halogen, cyano or a hydrocarbyl group having suitably from 1 to 18, more suitably from 1 to 9, carbon atoms or such hydrocarbyl groups containing an oxygen, sulfur, cyano or halogen or the like substitutent. Particularly suitable thiazole compounds include, for example, thiazole, 2-methylthiazole, 5-methylthiazole, 4-butylthiazole, 2-methyl-4-propylthiazole, 4-ethyl-5-methylthiazole, 2-(3-hydroxypropyl)thiazole, 2-phenylthiazole, 2-benzylthiazole, 4-phenyl-5-methylthiazole, 2-cyanothiazole, 5-chlorothiazole, 5-bromo-2-methylthiazole, and any combination thereof.

Suitable pyrrole compounds which can be employed herein include, for example, those represented by the following formula VII

Formula VII.

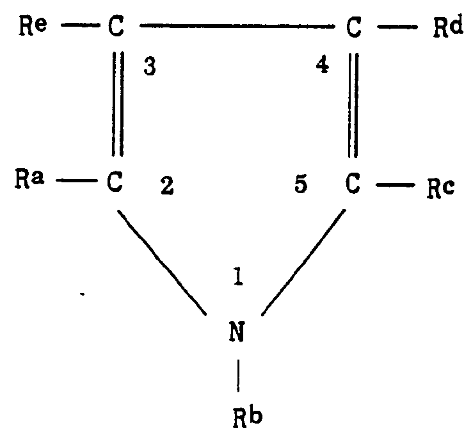

wherein each $R^a$, $R^b$, $R^c$, $R^d$ and $R^e$ is independently hydrogen, halogen, cyano or a hydrocarbyl group having suitably from 1 to 18, more suitably from 1 to 9, carbon atoms or such hydrocarbyl groups containing an oxygen, sulfur, cyano or halogen or the like substitutent. Particularly suitable pyrrole compounds include, for example, pyrrole, 1-methylpyrrole, 2-methylpyrrole, 3-butylpyrrole, 1-methyl-2-propylpyrrole, 2-ethyl-3-methylpyrrole, 1-(3-hydroxypropyl)pyrrole, 2-phenylpyrrole, 1-benzylpyrrole, 2-phenyl-1-methylpyrrole, 3-cyanopyrrole, 3-chloropyrrole, 2-bromo-1-methylpyrrole, and any combination thereof.

Suitable pyridine compounds which can be employed herein include, for example, those represented by the following formula VIII

Formula VIII.

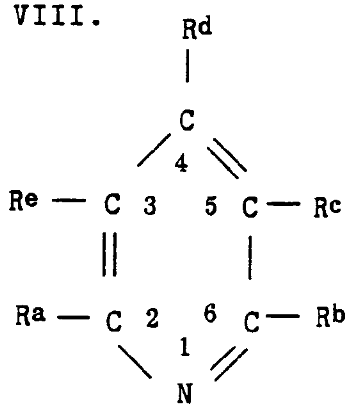

wherein each $R^a$, $R^b$, $R^c$, $R^d$ and $R^e$ is independently hydrogen, halogen, cyano or a hydrocarbyl group having suitably from 1 to 18, more suitably from 1 to 9, carbon atoms or such hydrocarbyl groups containing an oxygen, sulfur, cyano or halogen or the like substitutent. Particularly suitable pyridine compounds include, for example, pyridine, 2-methylpyridine, 3-methylpyridine, 4-butylpyridine, 2-methyl-3-propylpyridine, 3-ethyl-4-methylpyridine, 4-(3-hydroxypropyl)pyridine, 2-phenylpyridine, 3-benzylpyridine, 4-phenyl-2-methylpyridine, 3-cyanopyridine, 2-chloropyridine, 3-bromo-5-methylpyridine, and any combination thereof.

Suitable pyrazine compounds which can be employed herein include, for example, those represented by the following formula IX

Formula IX.

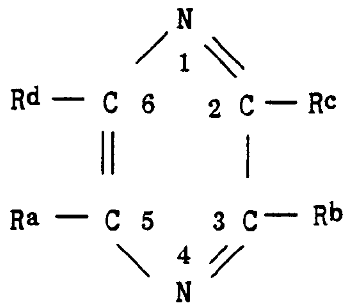

wherein each $R^a$, $R^b$, $R^c$ and $R^d$ is independently hydrogen, or a hydrocarbyl group having suitably from 1 to 18, more suitably from 1 to 9, carbon atoms or such hydrocarbyl groups containing an oxygen, sulfur, cyano or halogen or the like substitutent. Particularly suitable pyrazine compounds include, for example, pyrazine, 2-methylpyrazine, 3-methylpyrazine, 2-butylpyrazine, 2-methyl-5-propylpyrazine, 2-ethyl-6-methylpyrazine, 2-(3-hydroxypropyl)pyrazine, 2-phenylpyrazine, 2-benzylpyrazine, 2-phenyl-3-methylpyrazine, 2-cyanopyrazine, 2-chloropyrazine, 2-bromo-5-methylpyrazine, and any combination thereof.

Suitable pyridazine compounds which can be employed herein include, for example, those represented by the following formula X

Formula X.

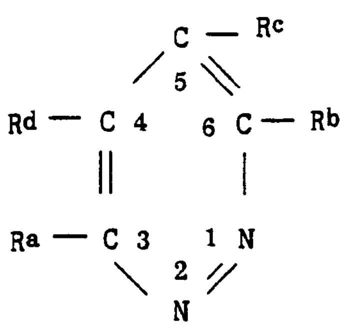

wherein each $R^a$, $R^b$, $R^c$, and $R^d$ is independently hydrogen, halogen, cyano or a hydrocarbyl group having suitably from 1 to 18, more suitably from 1 to 9, carbon atoms or such hydrocarbyl groups containing an oxygen,

sulfur, cyano or halogen or the like substitutent. Particularly suitable pyridazine compounds include, for example, pyridazine, 3-methylpyridazine, 4-methylpyridazine, 3-butylpyridazine, 3-methyl-4-propylpyridazine, 3-ethyl-6-methylpyridazine, 4-(3-hydroxypropyl)-pyridazine, 3-phenylpyridazine, 4-benzylpyridazine, 4-phenyl-5-methylpyridazine, 4-cyanopyridazine, 4-chloropyridazine, 3-bromo-5-methylpyridazine, and any combination thereof.

Suitable pyrrolidine compounds which can be employed herein include, for example, those represented by the following formula XI

Formula XI.

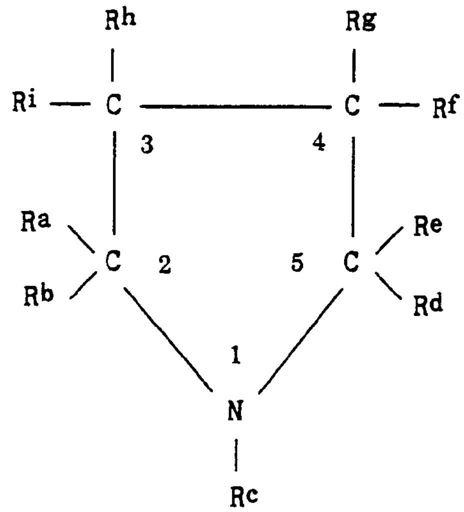

wherein each $R^a$, $R^b$, $R^c$, $R^d$, $R^e$, $R^f$, $R^g$, $R^h$ and $R^i$ is independently hydrogen, halogen, cyano or a hydrocarbyl group having from 1 to 18 carbon atoms or such hydrocarbyl groups containing an oxygen, sulfur, cyano or halogen or the like substitutent. Particularly suitable compounds include, for example, pyrrolidine, 1-methylpyrrolidine, 4-phenylpyrrolidine, 2-methylpyrrolidine, 3-methylpyrrolidine, 1-butylpyrrolidine, 1-methyl-2-propylpyrrolidine, 3-ethyl-4-methyl-pyrrolidine, 2-(3-hydroxypropyl)-pyrrolidine, 1-phenyl-2-methyl-pyrrolidine, 2-cyanopyrrolidine, 2-chloropyrrolidine, 2-bromo-1-methylpyrrolidine, and any combination thereof.

Suitable morpholine compounds which can be employed herein include, for example, those represented by the following formula XII

Formula XII.

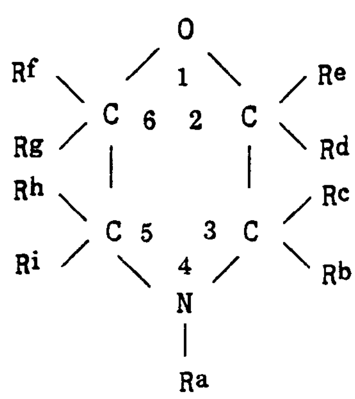

wherein each $R^a$, $R^b$, $R^c$, $R^d$, $R^e$, $R^f$, $R^g$, $R^h$ and $R^i$ is independently hydrogen, or a hydrocarbyl group having suitably from 1 to 18, more suitably from 2 to 9, carbon atoms or such hydrocarbyl groups containing an oxygen, sulfur, cyano or halogen or the like substitutent. Particularly suitable morpholine compounds include, for example, morpholine, 4-methylmorpholine, 3-methylmorpholine, 4-butylmorpholine, 4-methyl-3-propylmorpholine, 2-ethyl-3-methylmorpholine, 4-(3-hydroxypropyl)morpholine, 2-phenylmorpholine, 4-benzylmorpholine, 3-phenyl-1-methylmorpholine, 3-cyanomorpholine, 3-chloromorpholine, 3-bromo-4-methylmorpholine, and any combination thereof.

Suitable pyrimidine compounds which can be employed herein include, for example, those represented by the following formula XIII

Formula XIII.

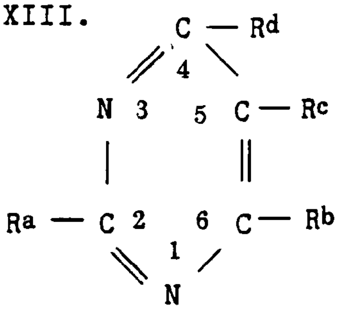

wherein each $R^a$, $R^b$, $R^c$ and $R^d$ is independently hydrogen, or a hydrocarbyl group having suitably from 1 to 18, more suitably from 1 to 9, carbon atoms or such hydrocarbyl groups containing an oxygen, sulfur, cyano or halogen or the like substitutent. Particularly suitable pyrimidine compounds which can be employed herein include, for example, pyrimidine, 2-methylpyrimidine, 4-methylpyrimidine, 2-butylpyrimidine, 2-methyl-4-propylpyrimidine, 4-ethyl-5-methylpyrimidine, 2-(3-hydroxypropyl)pyrimidine, 2-phenylpyrimidine, 2-benzylpyrimidine, 4-phenyl-2-methylpyrimidine, 4-cyanopyrimidine, 2-chloropyrimidine, 4-bromo-2-methylpyrimidine, and any combination thereof.

Suitable quinoxaline compounds which can be employed herein include, for example, those represented by the following formula XIV

Formula XIV.

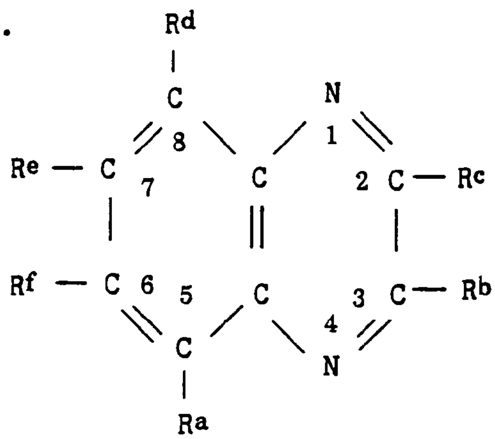

wherein each $R^a$, $R^b$, $R^c$, $R^d$, $R^e$, and $R^f$ is independently hydrogen, or a hydrocarbyl group having suitably from 1 to 18, more suitably from 1 to 9, carbon atoms or such hydrocarbyl groups containing an oxygen, sulfur, cyano or halogen or the like substitutent. Particularly suitable quinoxaline compounds include, for example, quinoxaline, 2-methylquinoxaline, 5-methylquinoxaline, 2-butylquinoxaline, 2-methyl-3-propylquinoxaline, 5-ethyl-6-methylquinoxaline, 2-(3-hydroxypropyl)quinoxaline, 2-phenylquinoxaline, 5-benzylquinoxaline, 2-phenyl-5-methylquinoxaline, 2-cyanoquinoxaline, 2-chloroquinoxaline, 2-bromo-5-methylquinoxaline, and any combination thereof.

Suitable quinazoline compounds which can be employed herein include, for example, those represented by the following formula XV

Formula XV.

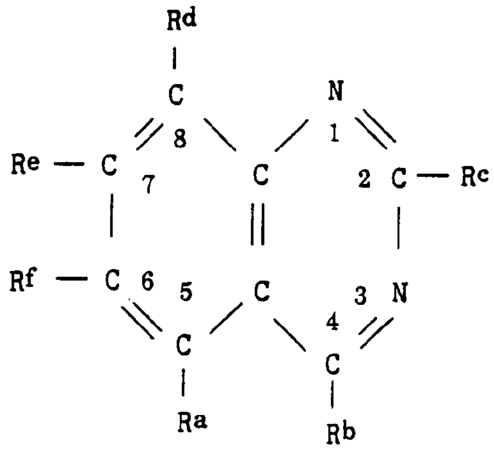

wherein each $R^a$, $R^b$, $R^c$, $R^d$, $R^e$, and $R^f$ is independently hydrogen, or a hydrocarbyl group having suitably from 1 to 18, more suitably from 1 to 9, carbon atoms or such hydrocarbyl groups containing an oxygen, sulfur, cyano or halogen or the like substitutent. Suitable quinazoline compounds include, for example, quinazoline, 2-methylquinazoline, 4-methylquinazoline, 2-butylquinazoline, 2-methyl-4-propylquinazoline, 5-ethyl-6-methylquinazoline, 2-(3-hydroxypropyl)quinazoline, 2-phenylquinazoline, 2-benzylquinazoline, 2-phenyl-4-methylquinazoline, 4-cyanoquinazoline, 4-chloroquinazoline, 2-bromo-4-methylquinazoline, and any combination thereof.

Suitable phthalazine compounds which can be employed herein include, for example, those represented by the following formula XVI

Formula XVI.

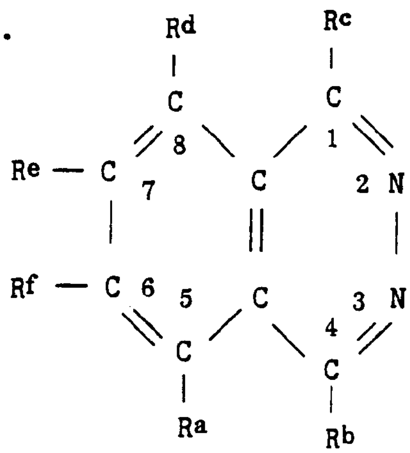

wherein each $R^a$, $R^b$, $R^c$, $R^d$, $R^e$, and $R^f$ is independently hydrogen, or a hydrocarbyl group having suitably from 1 to 18, more suitably from 1 to 9, carbon atoms or such hydrocarbyl groups containing an oxygen, sulfur, cyano or halogen or the like substitutent. Suitable phthalazine compounds include, for example, phthalazine, 1-methylphthalazine, 6-methylphthalazine, 1-butylphthalazine, 1-methyl-4-propylphthalazine, 1-ethyl-6-methylphthalazine, 1-(3-hydroxypropyl)-phthalazine, 5-phenylphthalazine, 1-benzylphthalazine, 1-phenyl-4-methylphthalazine, 1-cyanophthalazine, 1-chlorophthalazine, 1-bromo-4-methylphthalazine, and any combination thereof.

Suitable quinoline compounds which can be employed herein include, for example, those represented by the following formula XVII

Formula XVII.

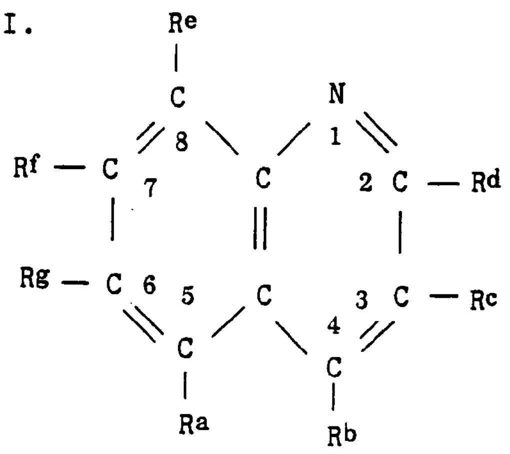

wherein each $R^a$, $R^b$, $R^c$, $R^d$, $R^e$, $R^f$ and $R^g$ is independently hydrogen, or a hydrocarbyl group having suitably from 1 to 18, more suitably from 1 to 9, carbon atoms or such hydrocarbyl groups containing an oxygen, sulfur, cyano or halogen or the like substitutent. Suitable quinoline compounds which can be employed herein include, for example, quinoline, 2-methylquinoline, 3-methylquinoline, 4-butylquinoline, 5-methyl-2-propylquinoline, 2-ethyl-3-methylquinoline, 3-(3-hydroxypropyl)quinoline, 3-phenylquinoline, 4-benzylquinoline, 3-phenyl-2-methylquinoline, 3-cyanoquinoline, 4-chloroquinoline, 2-bromo-3-methylquinoline, and any combination thereof.

Suitable purine compounds which can be employed herein include, for example, those represented by the following formula XVIII

Formula XVIII.

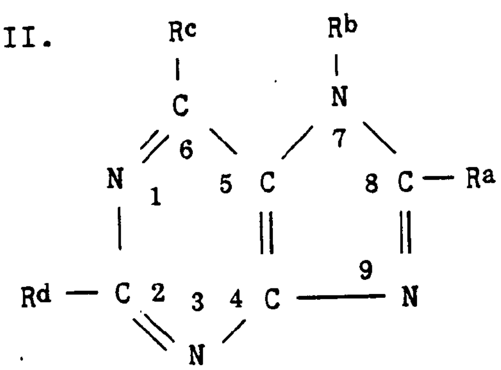

wherein each $R^a$, $R^b$, $R^c$ and $R^d$ is independently hydrogen, or a hydrocarbyl group having suitably from 1 to 18, more suitably from 1 to 9, carbon atoms or such hydrocarbyl groups containing an oxygen, sulfur, cyano or halogen or the like substitutent. Suitable purine compounds include, for example, purine, 2-methylpurine, 8-methylpurine, 6-butylpurine, 2-methyl-8-propylpurine, 6-ethyl-8-methylpurine, 8-(3-hydroxypropyl)purine, 2-phenylpurine, 2-benzylpurine, 6-phenyl-2-methylpurine, 8-cyanopurine, 2-chloropurine, 8-bromo-2-methylpurine, and any combination thereof.

Suitable indazole compounds which can be employed herein include, for example, those represented by the following formula XIX

Formula XIX.

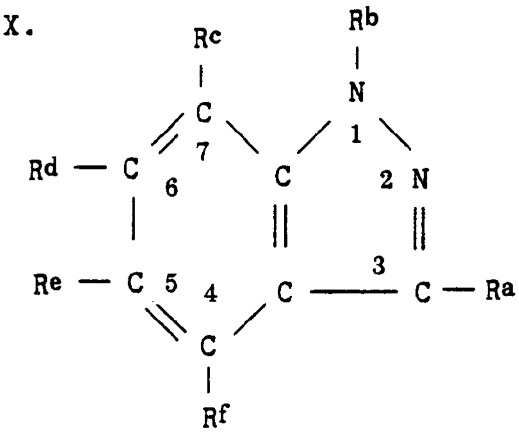

wherein each $R^a$, $R^b$, $R^c$, $R^d$, $R^e$ and $R^f$ is independently hydrogen, or a hydrocarbyl group having suitably from 1 to 18, more suitably from 1 to 9, carbon atoms or such hydrocarbyl groups containing an oxygen, sulfur, cyano or halogen or the like substitutent. Suitable indazole compounds include, for example, indazole, 1-methylindazole, 3-methylindazole, 1-butylindazole, 1-methyl-3-propylindazole, 1-ethyl-5-methylindazole, 3-(3-hydroxypropyl)indazole, 3-phenylindazole, 6-benzylindazole, 6-phenyl-1-methylindazole, 3-cyanoindazole, 5-chloroindazole, 3-bromo-1-methylindazole, and any combination thereof.

Suitable indole compounds which can be employed herein include, for example, those represented by the following formula XX

Formula XX.

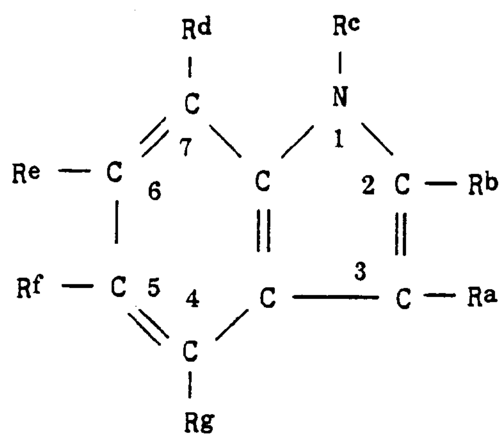

wherein each $R^a$, $R^b$, $R^c$, $R^d$, $R^e$, $R^f$ and $R^g$ is independently hydrogen, or a hydrocarbyl group having suitably from 1 to 18, more suitably from 1 to 9, carbon atoms or such hydrocarbyl groups containing an oxygen, sulfur, cyano or halogen or the like substitutent. Suitable indole compounds which can be employed herein include, for example, indole, 1-methylindole, 2-methylindole, 3-butylindole, 1-methyl-2-propylindole, 2-ethyl-3-methylindole, 1-(3-hydroxypropyl)indole, 2-phenylindole, 1-benzylindole, 2-phenyl-1-methylindole, 2-cyanoindole, 5-chloroindole, 3-bromo-1-methylindole, and any combination thereof.

Suitable indolizine compounds which can be employed herein include, for example, those represented by the following formula XXI

Formula XXI.

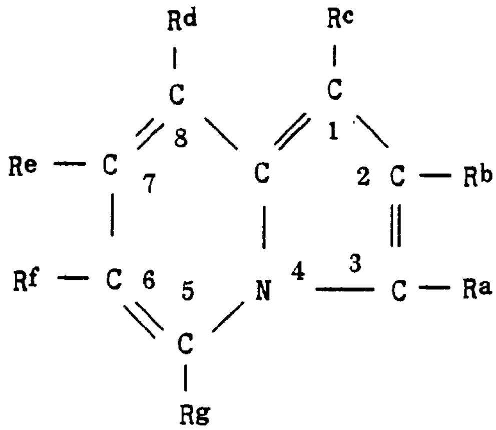

wherein each $R^a$, $R^b$, $R^c$, $R^d$, $R^e$, $R^f$ and $R^g$ is independently hydrogen, or a hydrocarbyl group having suitably from 1 to 18, more suitably from 1 to 9, carbon atoms or such hydrocarbyl groups containing an oxygen, sulfur, cyano or halogen or the like substitutent. Suitable indolizine compounds include, for example, indolazine, 1-methylindolizine, 2-methylindolizine, 3-butylindolizine, 5-methyl-1-propylindolizine, 2-ethyl-1-methylindolizine, 6-(3-hydroxypropyl)indolizine, 3-phenylindolizine, 7-benzylindolizine, 2-phenyl-3-methylindolizine, 5-cyanoindolizine, 7-chloroindolizine, 3-bromo-5-methylindolizine, and any combination thereof.

Suitable phenazine compounds which can be employed herein include, for example, those represented by the following formula XXII

Formula XXII.

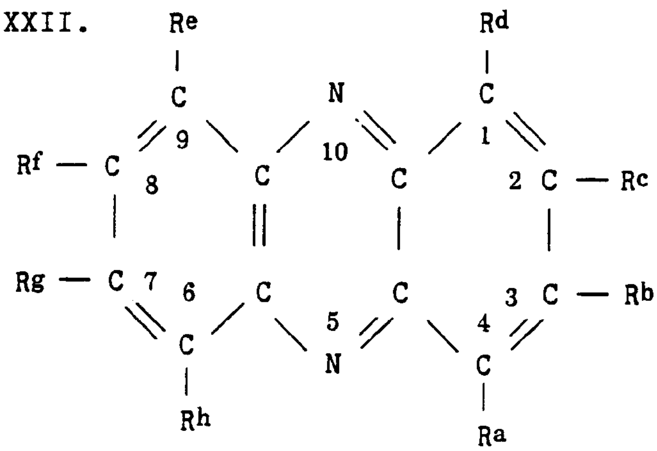

wherein each $R^a$, $R^b$, $R^c$, $R^d$, $R^e$, $R^f$, $R^g$ and $R^h$ is independently hydrogen, or a hydrocarbyl group having suitably from 1 to 18, more suitably from 1 to 9, carbon atoms or such hydrocarbyl groups containing an oxygen, sulfur, cyano or halogen or the like substitutent. Suitable phenazine compounds which can be employed herein include, for example, phenazine, 1-methylphenazine, 2-methylphenazine, 2-butylphenazine, 1-methyl-7-propylphenazine, 1-ethyl-4-methylphenazine, 2-(3-hydroxypropyl)phenazine, 1-phenylphenazine, 1-benzylphenazine, 1-phenyl-7-methylphenazine, 2-cyanophenazine, 1-chlorophenazine, 1-bromo-2-methylphenazine, and any combination thereof.

Suitable phenarsazine compounds which can be employed herein include, for example, those represented by the following formula XXIII

Formula XXIII.

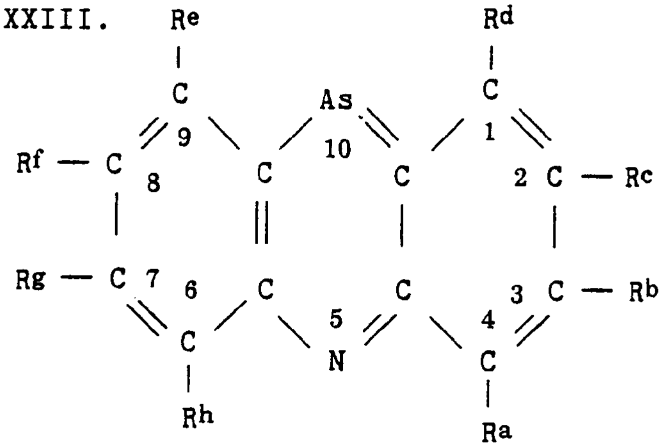

wherein each $R^a$, $R^b$, $R^c$, $R^d$, $R^e$, $R^f$, $R^g$ and $R^h$ is independently hydrogen, or a hydrocarbyl group having suitably from 1 to 18, more suitably from 1 to 9, carbon atoms or such hydrocarbyl groups containing an oxygen, sulfur, cyano or halogen or the like substitutent. Suitable phenarsazine compounds which can be employed herein include, for example, phenarsazine, 1-methylphenarsazine, 2-methylphenarsazine, 4-butylphenarsazine, 1-methyl-6-propylphenarsazine, 2-ethyl-3-methylphenarsazine, 1-(3-hydroxypropyl)-phenarsazine, 4-phenylphenarsazine, 3-benzylphenarsazine, 2-phenyl-7-methylphenarsazine, 3-cyanophenarsazine, 1-chlorophenarsazine, 1-bromo-8-methylphenarsazine, and any combination thereof.

Suitable phenothiazine compounds which can be employed herein include, for example, those represented by the following formula XXIV

Formula XXIV.

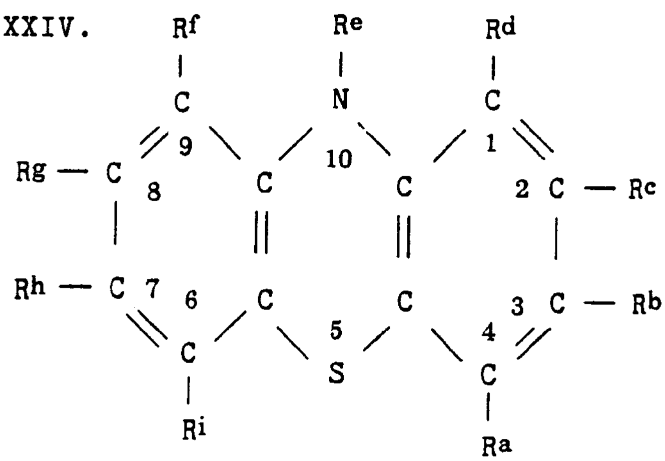

wherein each $R^a$, $R^b$, $R^c$, $R^d$, $R^e$, $R^f$, $R^g$, $R^h$ and $R^i$ is independently hydrogen, or a hydrocarbyl group having suitably from 1 to 18, more suitably from 1 to 9, carbon atoms or such hydrocarbyl groups containing an oxygen, sulfur, cyano or halogen or the like substitutent. Suitable phenothiazine compounds include, for example, phenothiazine, 10-methylphenothiazine, 1-methylphenothiazine, 2-butylphenothiazine, 10-methyl-4-propylphenothiazine, 2-ethyl-3-methylphenothiazine, 4-(3-hydroxypropyl)phenothiazine, 10-phenylphenothiazine, 1-benzylphenothiazine, 10-phenyl-4-methylphenothiazine, 7-cyanophenothiazine, 4-chlorophenothiazine, 4-bromo-10-methylphenothiazine, and any combination thereof.

Suitable pyrroline compounds which can be employed herein include, for example, those represented by the following formula XXV

Formula XXV.

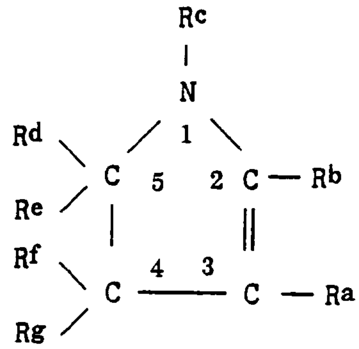

wherein each $R^a$, $R^b$, $R^c$, $R^d$, $R^e$, $R^f$ and $R^e$ is independently hydrogen, or a hydrocarbyl group having suitably from 1 to 18, more suitably from 1 to 9, carbon atoms or such hydrocarbyl groups containing an oxygen, sulfur, cyano or halogen or the like substituent. Suitable pyrroline compounds include, for example, pyrroline, 2-methylpyrroline, 4-methylpyrroline, 5-butylpyrroline, 5-methyl-1-propylpyrroline, 1-ethyl-3-methylpyrroline, 1-(3-hydroxypropyl)pyrroline, 5-phenylpyrroline, 1-benzylpyrroline, 1-phenyl-4-methylpyrroline, 3-cyanopyrroline, 5-chloropyrroline, 2-bromo-1-methylpyrroline, and any combination thereof.

Suitable indoline compounds which can be employed herein include, for example, those represented by the following formula XXVI

Formula XXVI.

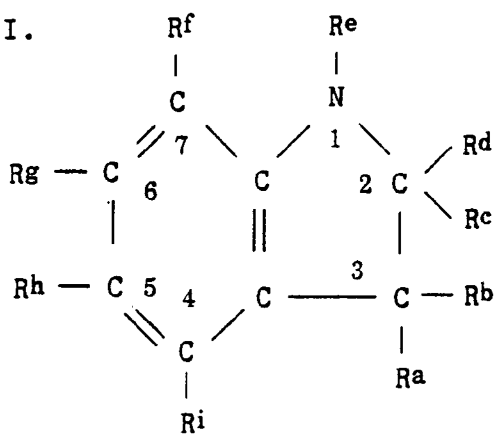

wherein each $R^a$, $R^b$, $R^c$, $R^d$, $R^e$, $R^f$, $R^g$, $R^h$ and $R^i$ is independently hydrogen, or a hydrocarbyl group having suitably from 1 to 18, more suitably from 1 to 9, carbon atoms or such hydrocarbyl groups containing an oxygen, sulfur, cyano or halogen or the like substituent. Particularly suitable indoline compounds include, for example, indoline, 1-methylindoline, 2-methylindoline, 3-butylindoline, 1-methyl-2-propylindoline, 2-ethyl-2-methylindoline, 1-(3-hydroxypropyl)indoline, 1-phenylindoline, 1-benzylindoline, 1-phenyl-2-methylindoline, 5-cyanoindoline, 7-chloroindoline, 5-bromo-1-methylindoline, and any combination thereof.

Suitable piperidine compounds which can be employed herein include, for example, those represented by the following formula XXVII

Formula XXVII.

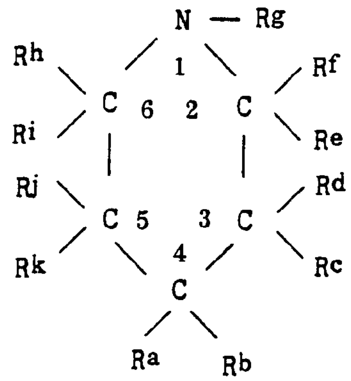

wherein each $R^a$, $R^b$, $R^c$, $R^d$, $R^e$, $R^f$, $R^g$, $R^h$, $R^i$, $R^j$ and $R^k$ is independently hydrogen, or a hydrocarbyl group having suitably from 1 to 18, more suitably from 1 to 9, carbon atoms or such hydrocarbyl groups containing an oxygen, sulfur, cyano or halogen or the like substituent. Suitable piperidine compounds which can be employed herein include, for example, piperidine, 1-methylpiperidine, 2-methylpiperidine, 3-butylpiperidine, 1-methyl-2-propylpiperidine, 2-ethyl-4-methylpiperidine, 1-(3-hydroxypropyl)-piperidine, 1-phenylpiperidine, 1-benzylpiperidine, 1-phenyl-2-methylpiperidine, 4-cyanopiperidine, 3-chloropiperidine, 4-bromo-1-methylpiperidine, and any combination thereof.

Suitable piperazine compounds which can be employed herein include, for example, those represented by the following formula XXVIII

Formula XXVIII.

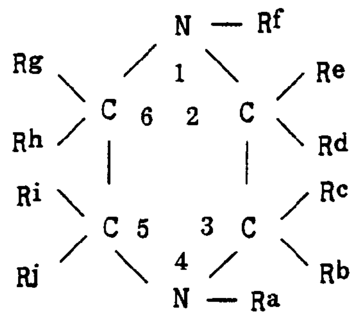

wherein each $R^a$, $R^b$, $R^c$, $R^d$, $R^e$, $R^f$, $R^g$, $R^h$, $R^i$ and $R^j$ is independently hydrogen, or a hydrocarbyl group having suitably from 1 to 18, more suitably from 1 to 9, carbon atoms or such hydrocarbyl groups containing an oxygen, sulfur, cyano or halogen or the like substituent. Particularly suitable piperazine compounds which can be employed herein include, for example, piperazine, 1-methylpiperazine, 2-methylpiperazine, 3-butylpiperazine, 1-methyl-4-propylpiperazine, 1-ethyl-3-methylpiperazine,-1-(3-hydroxypropyl)-piperazine, 2-phenylpiperazine, 1-benzylpiperazine, 1-methyl-3-phenylpiperazine, 2-cyanopiperazine, 2-chloropiperazine, 1,4-dimethyl-2-bromopiperazine, and any combination thereof.

Suitable boron containing acids include, for example, those represented by the formula $BR_3R'$ wherein each R is independently hydrogen or an aliphatic, cycloaliphatic or aromatic hydrocaron or substituted hydrocarbon group having suitably from 1 to 12, more suitably from 1 to 6, most suitably from 1 to 4, carbon atoms; and R' is a group other than a hydrocarbyl group such as, for example, a hydrocarbonoxy, hydrocarbonamino, a hydrocarbonphosphino, or a halogen atom, particularly fluorine, chlorine or bromine. The term hydrocarbon means any aliphatic, cycloaliphatic, aromatic, aryl substituted aliphatic, alkyl substituted aromatic groups.

Fluoboric acid is sometimes referred to as fluoroboric acid or hydrogen tetrafluoroborate. Any of these expressions refer to the chemical represented by the formula $HBF_4$.

Suitable such acids containing boron include, for example, hydrogen fluorotriphenylborate, hydrogen chlorotriphenylborate, hydrogen fluorotributylborate, hydrogen phenyltrifluoborate. Most particularly suitable such acid is fluoboric acid.

The term hydrocarbonoxy means that a hydrocarbyl group as previously defined has an oxygen atom between it and the boron atom. Likewise, the term hydrocarbonamino and hydrocarbonphosphino mean that there is an amine or phosphine group between the hydrocarbyl group and the boron atom.

Particularly suitable inorganic acids which are free of boron, said acid having a weak nucleophilic anion

include, for example, fluoarsenic acid, fluoantimonic acid, fluophosphoric acid, chloroboric acid, chloroarsenic acid, chloroantimonic acid, chlorophosphoric acid, perchloric acid, chloric acid, bromic acid, iodic acid, and any combination thereof.

Suitable metal salts of inorganic acids free from any organic substituents and having a weak nucleophilic anion include, for example, salts of those metals of Groups I and II of the Periodic Table of the Elements published by Sargent-Welch Scientific Company as catalog number S-18806. Particularly such salts include, for example, the sodium, potassium, lithium, calcium, barium, magnesium and silver salts of such inorganic acids.

Examples of the Catalysts

The following compounds are examples of the catalysts of the present invention. Imidazolonium compounds represented by the following formula I'

Formula I'

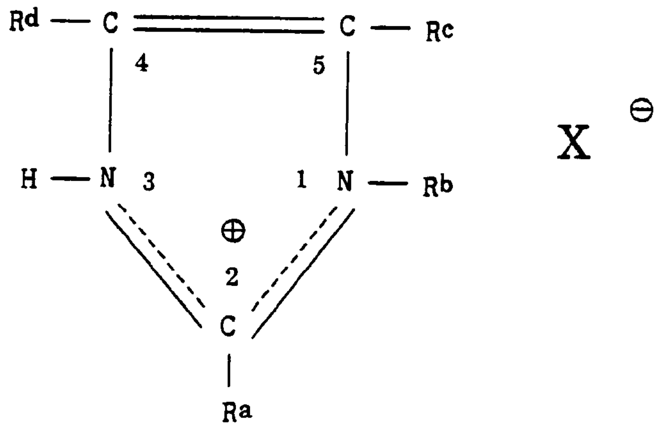

wherein $R^a$, $R^b$, $R^c$ and $R^d$ are previously defined in Formula I and X is the anion portion of (a) an inorganic acid free of boron having a weak nucleophilic anion or (b) a boron containing inorganic acid represented by the formula $HBR_3R'$ wherein each R is independently hydrogen or an aliphatic, cycloaliphatic or aromatic hydrocarbyl group having from 1 to 12 carbon atoms or a halogen and R' is a halogen.

Pyrazolinonium compounds represented by the following formula II'

Formula II'.

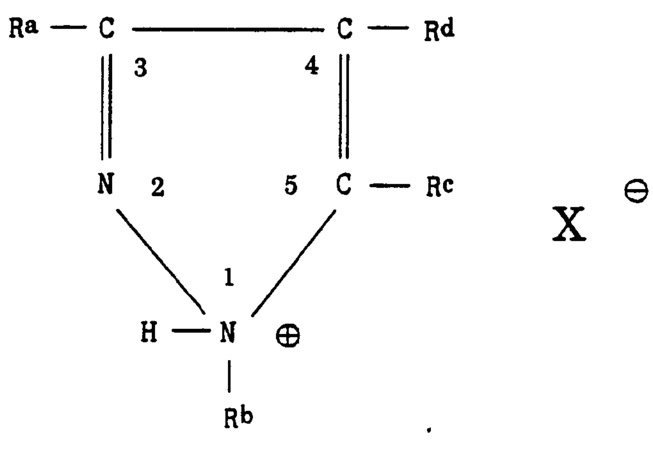

wherein each $R^a$, $R^b$, $R^c$ and $R^d$ is previously defined in Formula II; and X is the anion portion of an acid having a weak-nucleophilic anion.

Oxazolinonium compounds represented by the following formula III'

Formula III'.

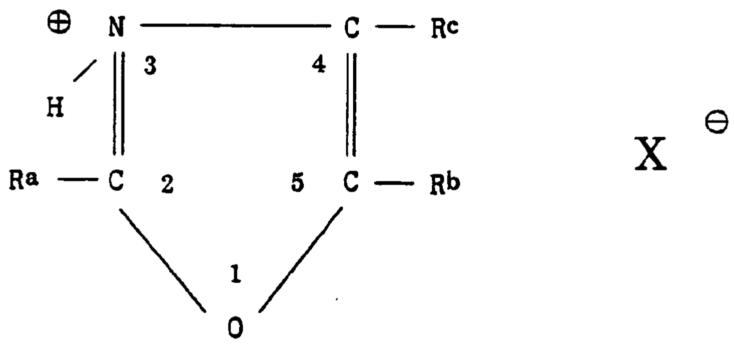

wherein each $R^a$, $R^b$ and $R^c$ is previously defined in Formula III; and X is the anion portion of an acid having a weak-nucleophilic anion.

Imidazolidinonium compounds represented by the following formula IV'

Formula IV'.

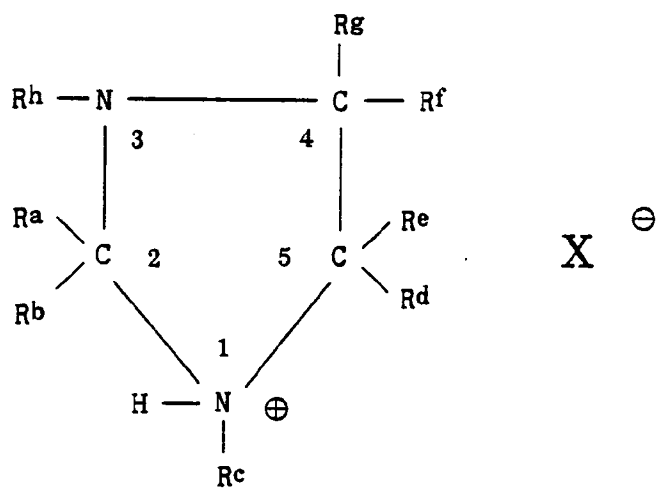

wherein each $R^a$, $R^b$, $R^c$, $R^d$, $R^e$, $R^f$, $R^g$ and $R^h$ is previously defined in Formula IV; and X is the anion portion of an acid having a weak-nucleophilic anion.

Imidazolinonium compounds represented by the following formula V'

Formula V'.

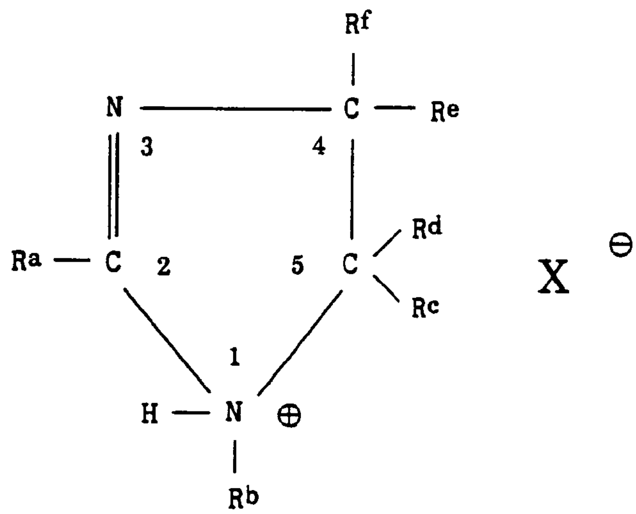

wherein each $R^a$, $R^b$, $R^c$, $R^d$, $R^e$ and $R^f$ is previously defined in Formula V; and X is the anion portion of an acid having a weak nucleophilic anion.

Thiazolonium compounds represented by the following formula VI'

Formula VI'.

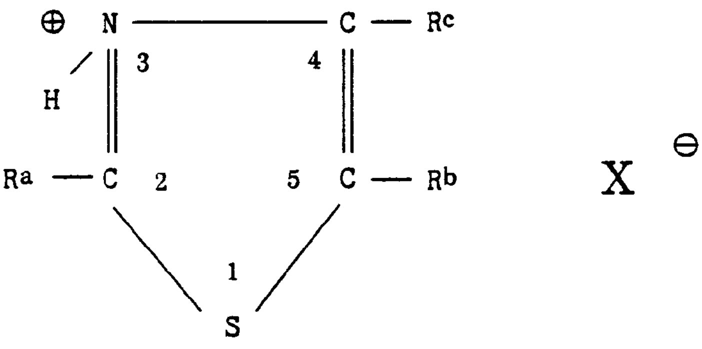

wherein each $R^a$, $R^b$ and $R^c$ is previously defined in Formula VI; and X is the anion portion of an acid having a weak-nucleophilic anion.

Pyrrolonium compounds represented by the following formula VII'

Formula VII'.

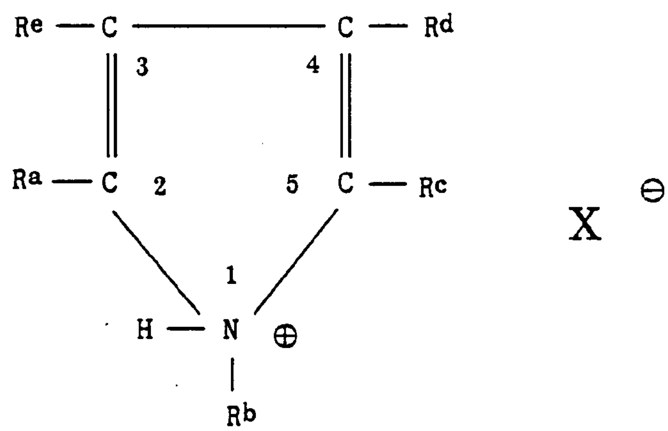

wherein each $R^a$, $R^b$, $R^c$, $R^d$ and $R^e$ is previously defined in Formula VII; and X is the anion portion of an acid having a weak nucleophilic anion.

Pyridinonium compounds represented by the following formula VIII'

Formula VIII'.

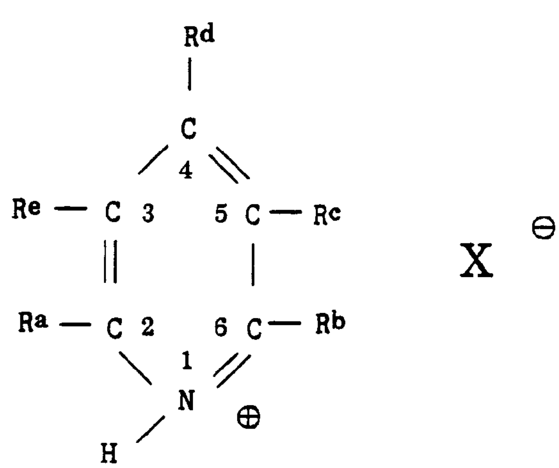

wherein each $R^a$, $R^b$, $R^c$, $R^d$ and $R^e$ is previously defined in Formula VIII; and X is the anion portion of an acid having a weak-nucleophilic anion.

Pyrazinonium compounds represented by the following formula IX'

Formula IX'.

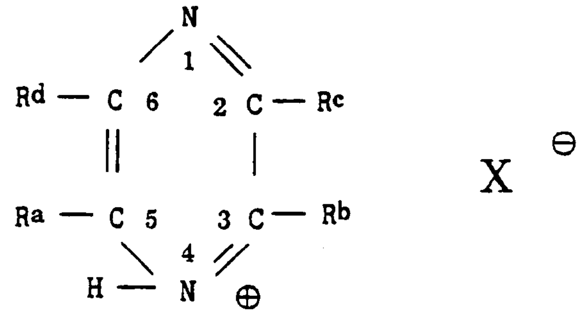

wherein each $R^a$, $R^b$, $R^c$ and $R^d$ is previously defined in Formula IX; and X is the anion portion of an acid having a weak nucleophilic anion.

Pyridzazinonium compounds represented by the following formula X'

Formula X'

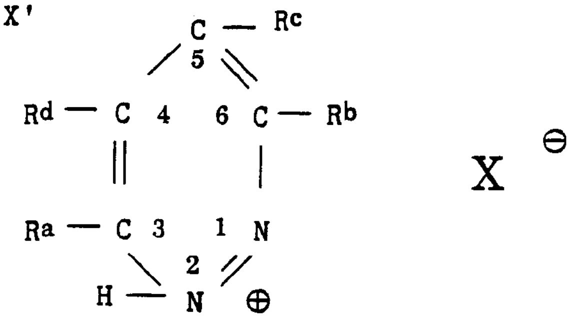

wherein each $R^a$, $R^b$, $R^c$, and $R^d$ is previously defined in Formula X; and X is the anion portion of an acid having a weak nucleophilic anion.

Pyrrolidinonium compounds represented by the following formula XI'

Formula XI'.

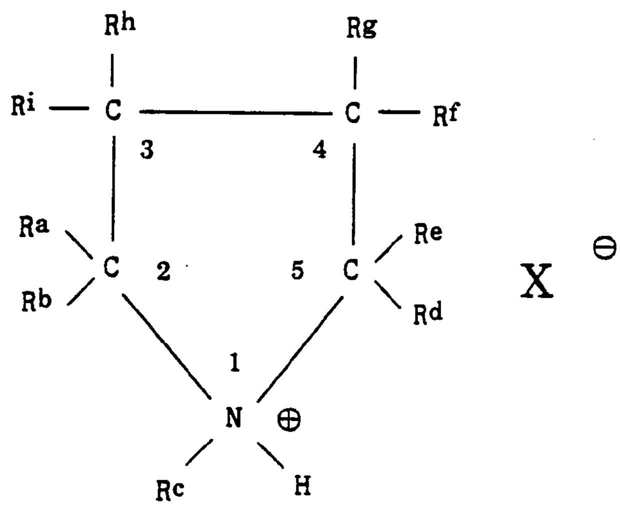

wherein each $R^a$, $R^b$, $R^c$, $R^d$, $R^e$, $R^f$, $R^g$, $R^h$ and $R^i$ is previously defined in Formula XI; and X is the anion portion of an acid having a weak nucleophilic anion.

Morpholinonium compounds represented by the following formula XII'

Formula XII'.

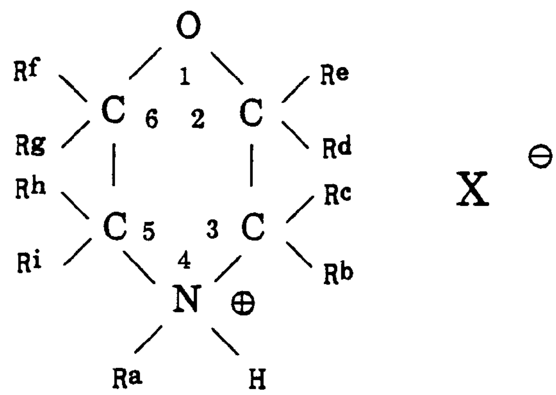

wherein $R^a$, $R^b$, $R^c$, $R^d$, $R^e$, $R^f$, $R^g$, $R^h$ and $R^i$ is previously defined in Formula XII; and X is the anion portion of an acid having a weak-nucleophilic anion or a combination of such acids.

Pyrimidinonium compounds represented by the following formula XIII'

Formula XIII'.

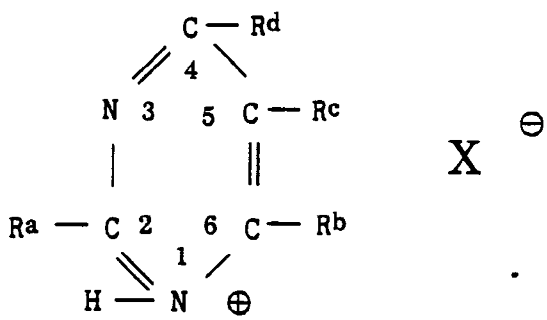

wherein each $R^a$, $R^b$, $R^c$ and $R^d$ is previously defined in Formula XIII; and X is the anion portion of an acid having a weak nucleophilic anion.

Quinoxalinonium compounds represented by the following formula XIV'

Formula XIV'.

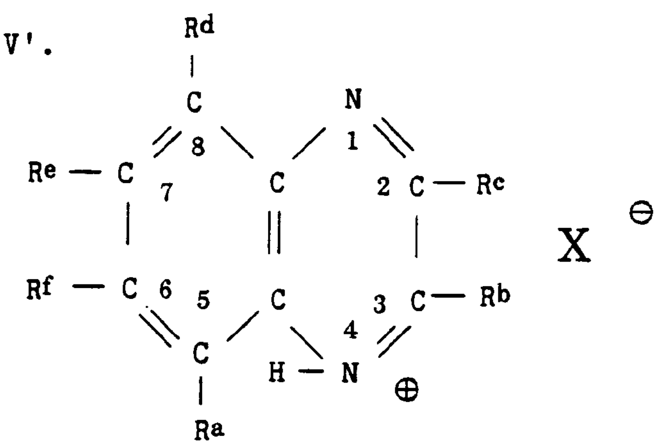

wherein each $R^a$, $R^b$, $R^c$, $R^d$, $R^e$, and $R^f$ is previously defined in Formula XIV; and X is the anion portion of an acid having a weak nucleophilic anion.

Quinazolinonium compounds represented by the following formula XV'

Formula XV'.

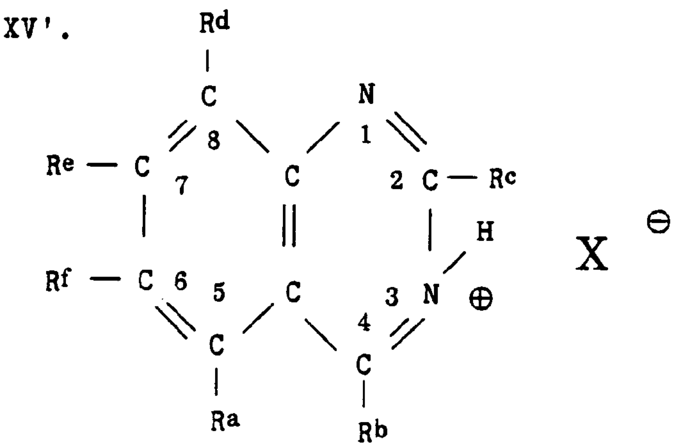

wherein each $R^a$, $R^b$, $R^c$, $R^d$, $R^e$, and $R^f$ is previously defined in Formula XV; and X is the anion portion of an acid having a weak nucleophilic anion.

Phthalazinonium compounds represented by the following formula XVI'

Formula XVI'.

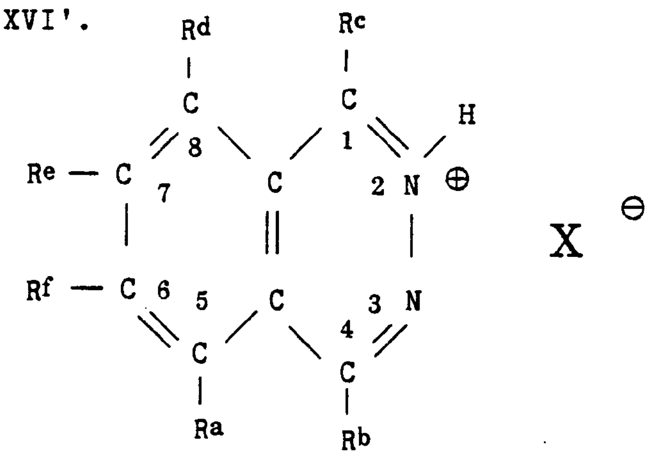

wherein each $R^a$, $R^b$, $R^c$, $R^d$, $R^e$, and $R^f$ is previously defined in Formula XVI; and X is the anion portion of an acid having a weak nucleophilic anion.

Quinolinonium compounds represented by the following formula XVII'

Formula XVII'

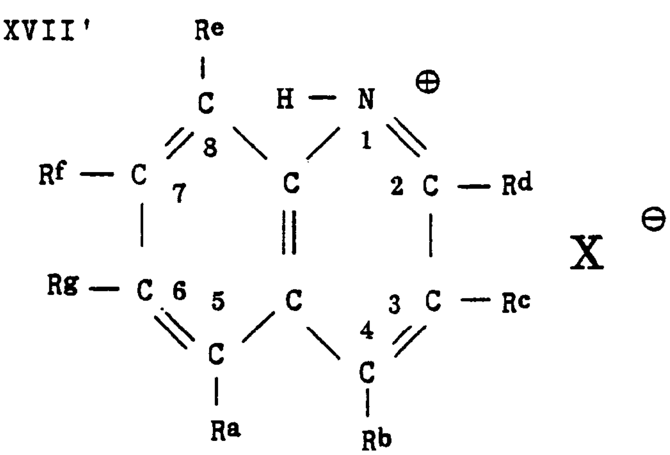

wherein each $R^a$, $R^b$, $R^c$, $R^d$, $R^e$, $R^f$ and $R^g$ is previously defined in Formula XVII; and X is the anion portion of an acid having a weak nucleophilic anion.

Purinonium compounds represented by the following formula XVIII' .

Formula XVIII'.

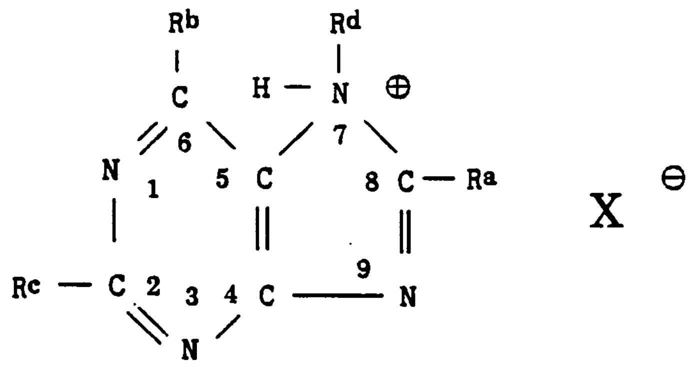

wherein each $R^a$, $R^b$, $R^c$ and $R^d$ is previously defined in Formula XVIII; and X is the anion portion of an acid having a weak nucleophilic anion.

Indazolonium compounds represented by the following formula XIX'

Formula XIX'.

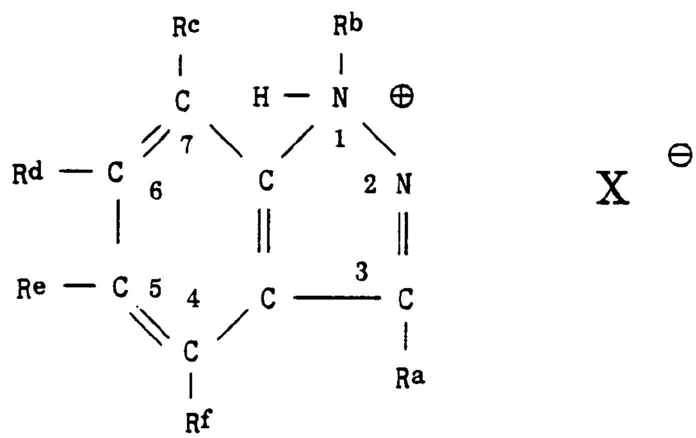

wherein each $R^a$, $R^b$, $R^c$, $R^d$, $R^e$ and $R^f$ is previously defined in Formula XIX; and X is the anion portion of an acid having a weak nucleophilic anion.

Indolonium compounds represented by the following Formula XX'

Formula XX'.

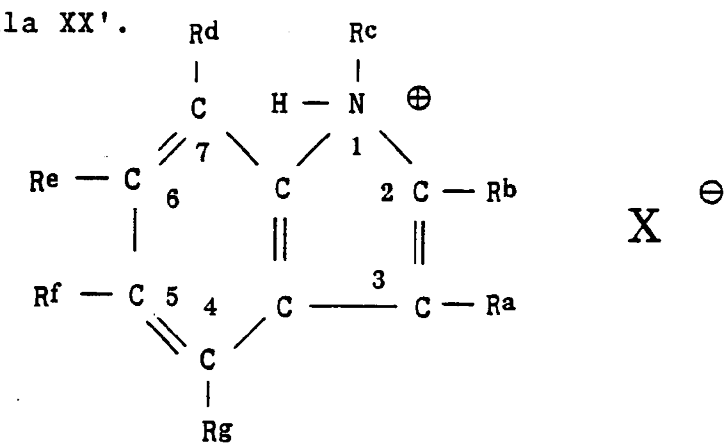

wherein each $R^a$, $R^b$, $R^c$, $R^d$, $R^e$, $R^f$ and $R^g$ is previously defined in Formula XX; and X is the anion portion of an acid having a weak nucleophilic anion.

Indolizinonium compounds represented by the following formula XXI'

Formula XXI'.

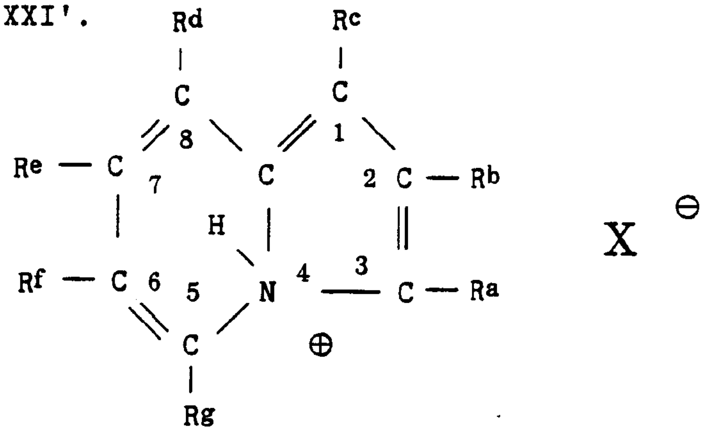

wherein each $R^a$, $R^b$, $R^c$, $R^d$, $R^e$, $R^f$ and $R^g$ is previously defined in Formula XXI; and X is the anion portion of an acid having a weak nucleophilic anion.

Phenazinonium compounds represented by the following formula XXII'

Formula XXII'.

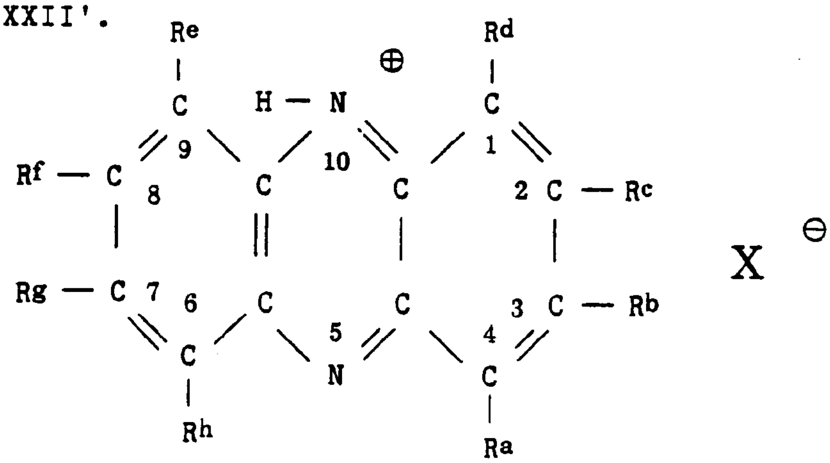

wherein each $R^a$, $R^b$, $R^c$, $R^d$, $R^e$, $R^f$, $R^g$ and $R^h$ is previously defined in Formula XXII and X is the anion portion of an acid having a weak nucleophilic anion.

Phenarsazinonium compounds represented by the following formula XXIII'

Formula XXIII'.

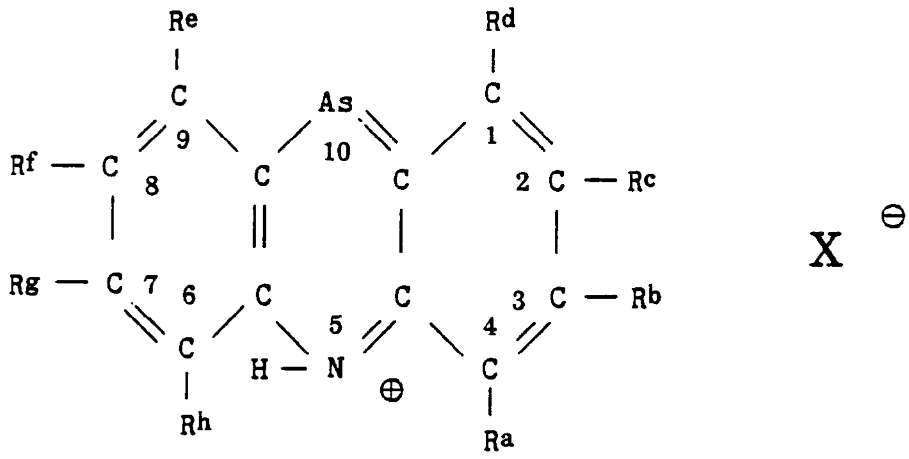

wherein each $R^a$, $R^b$, $R^c$, $R^d$, $R^e$, $R^f$, $R^g$ and $R^h$ is previously defined in Formula XXIII; and X is the anion portion of an acid having a weak nucleophilic anion.

Phenothiazinonium compounds represented by the following formula XXIV'

Formula XXIV'.

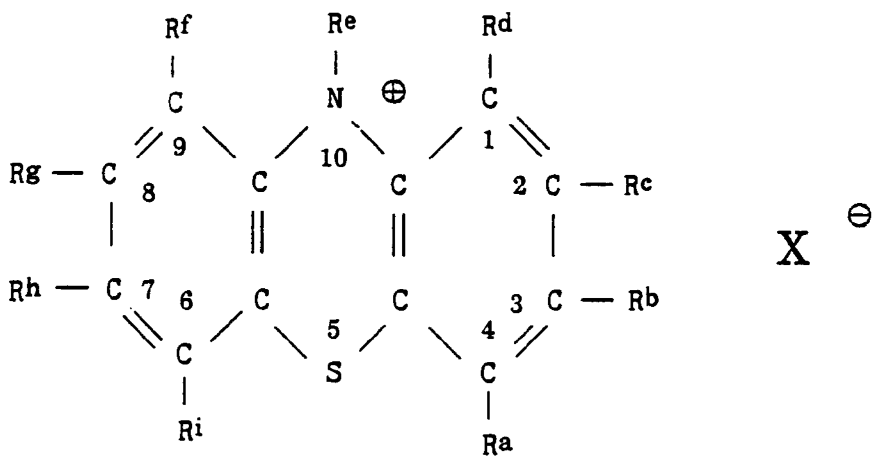

wherein each $R^a$, $R^b$, $R^c$, $R^d$, $R^e$, $R^f$, $R^g$, $R^h$ and $R^i$ is previously defined in Formula XXIV; and X is the anion portion of an acid having a weak nucleophilic anion.

Pyrrolinonium compounds represented by the following formula XXV'

Formula XXV'.

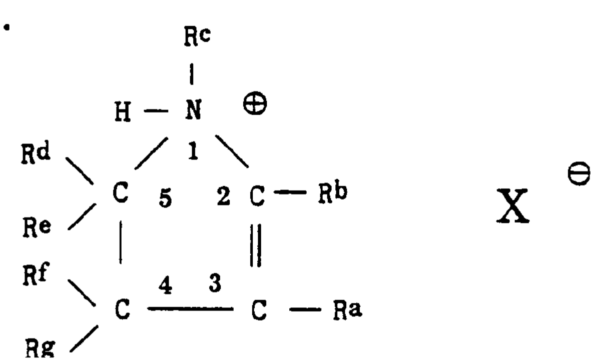

wherein each $R^a$, $R^b$, $R^c$, $R^d$, $R^e$, $R^f$ and $R^g$ is previously defined in Formula XXV; and X is the anion portion

of an acid having a weak nucleophilic anion.

Indolinonium compounds represented by the following formula XXVI'

Formula XXVI'.

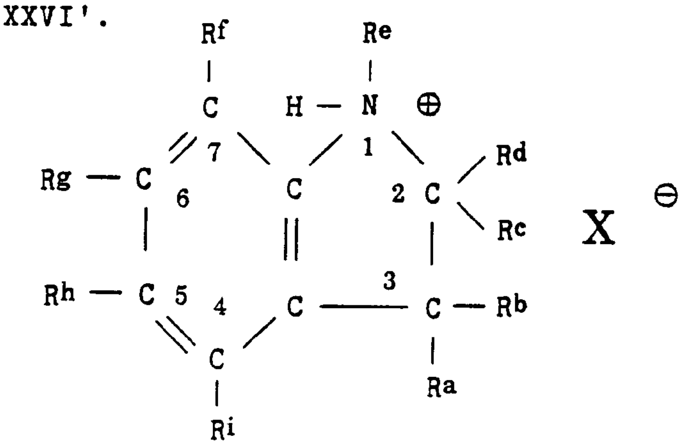

wherein each $R^a$, $R^b$, $R^c$, $R^d$, $R^e$, $R^f$, $R^g$, $R^h$ and $R^i$ is previously defined in Formula XXVI and X is the anion portion of an acid having a weak nucleophilic anion.

Piperidinonium compounds represented by the following formula XXVII'

Formula XXVII'.

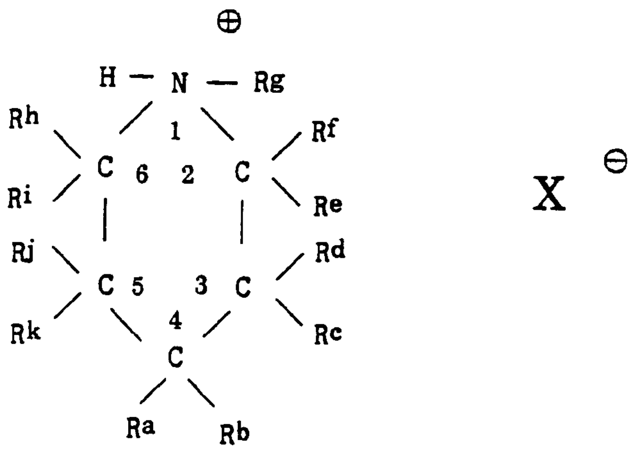

wherein each $R^a$, $R^b$, $R^c$, $R^d$, $R^e$, $R^f$, $R^g$, $R^h$, $R^i$, $R^j$ and $R^k$ is previously defined in Formula XXVII and X is the anion portion of an acid having a weak nucleophilic anion.

Piperazinonium compounds represented by the following formula XXVIII'

Formula XXVIII'.

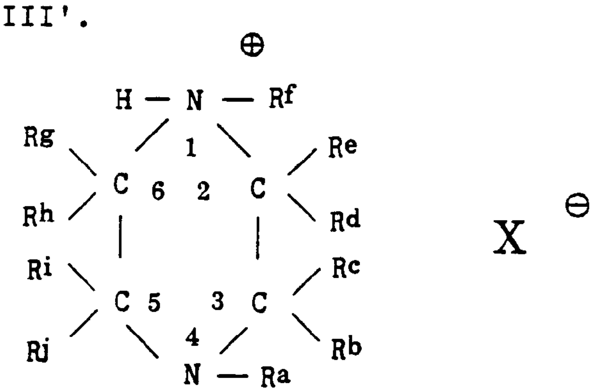

wherein each $R^a$, $R^b$, $R^c$, $R^d$, $R^e$, $R^f$, $R^g$, $R^h$, $R^i$ and $R^j$ is previously defined in Formula XXVIII; and X is the anion portion of an acid having a weak nucleophilic anion.

Epoxy Containing Compounds

Suitable compounds having an average of more than one epoxide group per molecule which can be employed herein include, epoxy resins such as, for example, the glycidyl ethers of polyhydric phenols such as dihydroxy phenols, biphenols, bisphenols, halogenated bisphenols, alkylated bisphenols, trisphenols, phenol-aldehyde novolac resins, substituted phenol-aldehyde novolac resins, phenol-hydrocarbon resins, substituted phenol-hydrocarbon resins, and any combination thereof. Suitable such epoxy resins include, for example, those represented by the following formulas A-E

Formula A

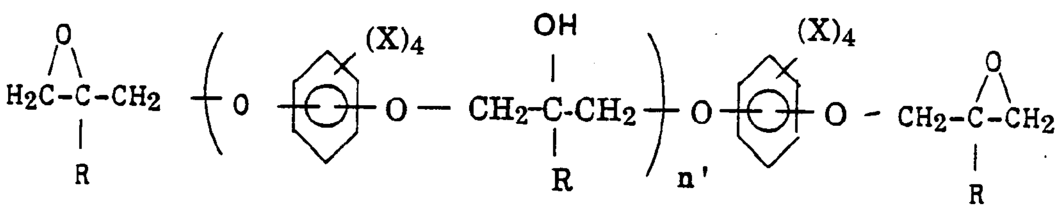

Formula B

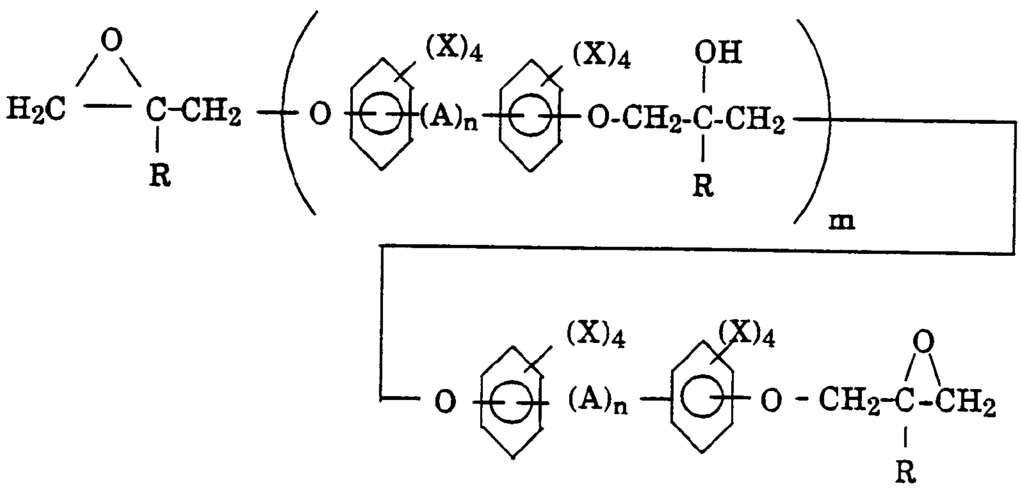

Formula C

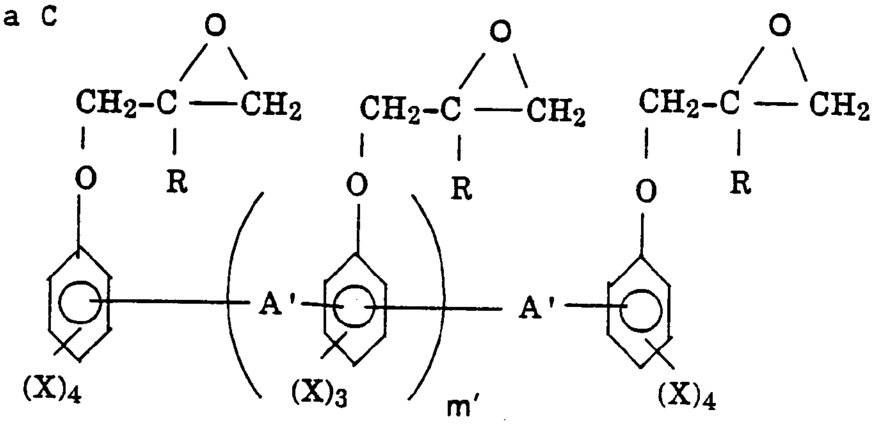

Formula D

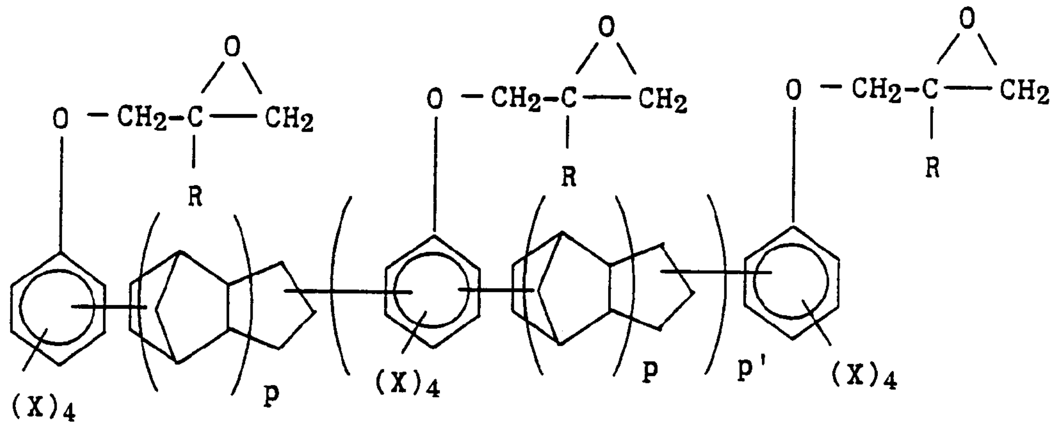

Formula E

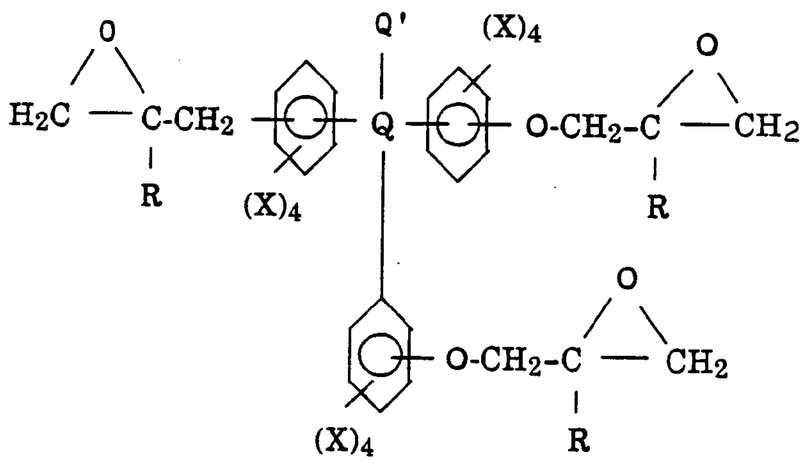

wherein each A is independently a divalent hydrocarbyl group having from 1 to 9, preferably from 1 to 4, carbon atoms, -O-, -S-, -S-S-, -SO-, $-SO_2-$, or -CO-; each A' is independently a divalent hydrocarbyl group having from 1 to 9, preferably from 1 to 4 carbon atoms; Q is a hydrocarbyl group having from 1 to 10 carbon atoms; Q' is hydrogen, halogen, cyano or an alkyl group having from 1 to 4 carbon atoms; each R is independently hydrogen, halogen, cyano or an alkyl group having from 1 to 4 carbon atoms; each X is independently hydrogen, bromine, chlorine, or a hydrocarbyl or hydrocarbyloxy group having from 1 to 9, preferably from 1 to 4 carbon atoms; m has an average value from zero to 12, preferably from zero to 9, most preferably from 0.03 to 3; m' has an average value from 0.01 to 8, preferably from 0.2 to 6, more preferably from 0.5 to 4; n has a value of zero or 1; n' has an average value of from zero to 12, preferably from zero to 9, most preferably from 0.03 to 3; each p suitably has a value from zero to 10, more suitably from zero to 6, most suitably from 1 to 3; and each p' suitably has a value from zero to 8, more suitably from 1 to 6, most suitably from 2 to 4. Also suitable are the oligomers of the epoxy resin represented by formula E.

The term hydrocarbyl as employed herein means any aliphatic, cycloaliphatic, aromatic, aryl substituted aliphatic or cycloaliphatic, or aliphatic or cycloaliphatic substituted aromatic groups. The aliphatic groups can be saturated or unsaturated. Likewise, the term hydrocarbyloxy means a hydrocarbyl group having an oxygen linkage between it and the carbon atom to which it is attached.

Particularly suitable such epoxy resins include, for example, the diglycidyl ethers of resorcinol, catechol, hydroquinone, biphenol, bisphenol A, bisphenol F, bisphenol K, tetrabromobisphenol A, phenol-formaldehyde novolac resins, alkyl substituted phenol-formaldehyde resins, phenol-hydroxybenzaldehyde resins, cresol-hydroxybenzaldehyde resins, dicyclopentadiene-phenol resins, dicyclopentadiene- substituted phenol resins, tetramethylbiphenol, tetramethyl-tetrabromobiphenol, tetramethyltribromobiphenol, tetrachlorobisphenol A, and any combination thereof.

Also suitable as the epoxide compound which can be employed in the present invention include those partially advanced epoxy resins disclosed by Bertram et al. in U.S. Patent 4,594,291.

Also suitable as the epoxide compound are the glycidyl ethers of compounds having an average of more than one aliphatic hydroxyl group per molecule such as, for example, aliphatic diols, polyether diols, polyether triols, polyether tetrols, and any combination thereof. Also suitable are the alkylene oxide adducts of compounds containing an average of more than one aromatic hydroxyl group per molecule such as, for example, the ethylene oxide, propylene oxide, or butylene oxide adducts of dihydroxy phenols, biphenols, bisphenols, halogenated bisphenols, alkylated bisphenols, trisphenols, phenol-aldehyde novolac resins, halogenated phenol-aldehyde novolac resins, alkylated phenol-aldehyde novolac resins, hydrocarbon-phenol resins, hydrocarbon-halogenated phenol resins, or hydrocarbon-alkylated phenol resins, or and any combination thereof.

## Aromatic Hydroxyl Containing Compounds

Suitable aromatic hydroxyl containing compounds which can be employed herein include, for example, compounds having an average of more than one phenolic hydroxyl group per molecule. Suitable such compounds include, for example, dihydroxy phenols, biphenols, bisphenols, halogenated bisphenols, alkylated bisphenols, trisphenols, phenol-aldehyde resins, halogenated phenol-aldehyde novolac resins, alkylated phenol-aldehyde novolac resins, phenolhydroxybenzaldehyde resins, alkylated phenolhydroxybenzaldehyde resins, hydrocarbon-phenol resins, hydrocarbon-halogenated phenol resins, hydrocarbon-alkylated phenol resins, and any combination thereof. Particularly suitable aromatic hydroxyl containing compounds include, for example, those represented by the following formulas F-I

Formula F

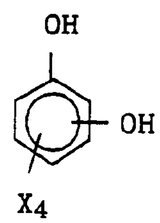

Formula G

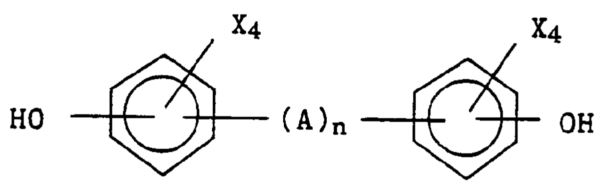

Formula H

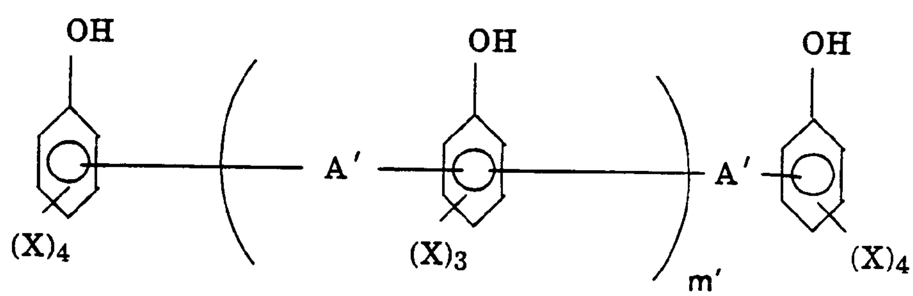

Formula I

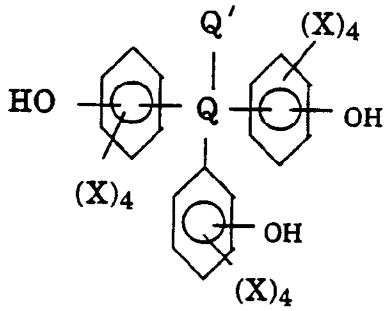

wherein A, A', Q, Q', X, n and m are as defined above in formulas A-E. Particularly suitable aromatic hydroxyl-containing materials include, for example, biphenol, bisphenol A, bisphenol K, tetrabromobisphenol A, tetrabromobisphenol K, resorcinol, phenol-aldehyde novolac resins, cresol-aldehyde novolac resins, phenol-hydroxybenzaldehyde resins, cresol-hydroxybenzaldehyde resins, tetramethylbiphenol, tetramethyltribromobiphenol, tetramethyltetrabromobiphenol, tetrachlorobisphenol A, and any combination thereof. Also suitable are the oligomers of the multifunctional phenolic compounds represented by the formula I.

These and other suitable aromatic hydroxyl-containing compounds are disclosed in U.S. Patent No. 4,594,291 issued June 10, 1986 by Bertram et al.

The aromatic hydroxyl-containing compounds are employed in amounts which provide a ratio of aromatic hydroxyl groups to epoxy groups suitably from 0.05:1 to 20:1, more suitably from 0.1:1 to 10:1, most suitably from 0.2:1 to 5:1.

The precatalyzed compositions of the present invention can contain, if desired, pigments, fillers, dyes, diluents, solvents, stabilizers, epoxy resin curing agents, and any combination thereof.

Suitable stabilizer materials and curing agents which can be employed herein include, for example, those disclosed in the aforementioned U.S. Patent No. 4,594,291 by Bertram et al.

The compositions of the present invention are useful in the preparation of formulations for use in the preparation of electrical and structural laminates and composites, coatings, castings, moldings, encapsulants and the like. They can be employed in the conventional methods or the newer reaction transfer molding (RTM) and reaction injection molding (RIM) techniques.

## Examples

The following examples are illustrative of the invention.

### Example 1 PREPARATION OF 2-METHYLIMIDAZOLIUM FLUOBORATE COMPLEX

A glass flask fitted with a stirrer, thermometer, and reflux condenser was charged with 15.37 grams (0.098 mole) of a 55.9 percent aqueous solution, by weight, of fluoboric acid. To this stirred solution, 8.2 grams (0.100 mole) of 2-methylimidazole were slowly added during about five minutes. The heat from the reaction warmed the solution to approximately 50°C as the 2-methylimidazole dissolved. The solution was stirred for an additional 30 minutes as it cools to near ambient temperature. Methanol was then added, 19.98 grams, to dilute the solution to 38.6 percent solids based on the weight of the 2-methylimidazole and fluoboric acid.

The concentration of the aqueous fluoboric acid was determined by potentiometric titration to the first inflection point with 0.100 N potassium hydroxide in methanol. An MCI GT-05 automatic titrator and a combination silver/silver chloride electrode (Curtain Matheson Scientific No. 201-947) were used to measure the pH changes during the course of the titration.

### Examples 2-12 PREPARATION OF 2-METHYLIMIMIDAZOLIUM FLUOBORATE COMPLEXES

The procedure described in Example 1 was repeated using the same procedure and amount of 2-methylimidazole (2-MI), however the weight of fluoboric acid (55.9 percent aqueous solution) was varied as shown in Table I. All experiments were diluted with methanol to 38.5 percent solids based on the combined weights of 2-MI and fluoboric acid. The results are given in Table I.

Table I

| 2-METHYLIMIDAZOLE WITH VARYING RATIOS OF FLUOBORIC ACID | | |
|---|---|---|
| Example Number | Fluoboric Acid Solution (grams) | Moles of Fluoboric Acid Per Mole of 2-MI |
| 2 | 11.71 | 0.75 |
| 3 | 13.17 | 0.84 |
| 4 | 13.90 | 0.89 |
| 5 | 14.63 | 0.93 |
| 1 | 15.37 | 0.98 |
| 6 | 16.10 | 1.03 |
| 7 | 16.83 | 1.07 |
| 8 | 17.56 | 1.12 |
| 9 | 17.88 | 1.14 |
| 10 | 18.35 | 1.17 |
| 11 | 20.39 | 1.30 |
| 12 | 21.17 | 1.35 |

Example 13 PREPARATION OF 2-PHENYLIMIDAZOLIUM FLUOBORATE

A glass flask fitted with a stirrer, thermometer, and reflux condenser was charged with 15.37 grams (0.098 mole) of a 55.9 percent aqueous solution, by weight, of fluoboric acid and 29.3 grams of methanol. To this stirred solution, 14.4 grams (0.100 mole) of 2-phenylimidazole (2-P1) were slowly added during about five minutes. The heat from the reaction warmed the solution to approximately 50°C as the 2-phenylimidazole dissolved. The solution was stirred for an additional 30 minutes as it cooled to near ambient. The product was a clear solution containing 38.9 percent by weight of the 2-phenylimidazolium fluoborate adduct/complex.

Example 14 PREPARATION OF 4-METHYLIMIDAZOLIUM FLUOBORATE COMPLEX

The procedure of Example 13 was followed using the following reagents:

4.00 g (0.0487 mole) of 4-methylimidazole (4-MI)
7.84 g (0.0500 mole) of fluoboric acid (55.9 percent aqueous)
9.92 g of methanol

The resultant product was a clear solution containing 38.5 percent by weight of the 4-methylimidazolium fluoborate adduct/complex.

Example 15 PREPARATION OF 1,2-DIMETHYLIMIDAZOLIUM FLUOBORATE COMPLEX

The procedure of Example 13 was followed using the following reagents:

4.68 g (0.0487 mole) of 1,2-dimethylimidazole (1,2-DMI)
7.84 g (0.0500 mole) of fluoboric acid (55.9 percent aqueous)
10.95 g of methanol

The resultant product was a clear solution containing 38.6 percent by weight of the 1,2-dimethylimidazolium fluoborate adduct/complex.

Example 16 PREPARATION OF 2-ETHYL-4-METHYLIMIDAZOLIUM FLUOBORATE COMPLEX

The procedure of Example 13 was followed using the following reagents:

5.36 g (0.0487 mole) of 2-ethyl-4-methylimidazole (2-E-4-MI)
7.84 g (0.0500 mole) of fluoboric acid (55.9 percent aqueous)

11.98 g of methanol

The resultant product was a clear solution containing 38.7 percent by weight of the 2-ethyl-4-methylimidazolium fluoborate adduct/complex.

Example 17 PREPARATION OF 4,5-DIPHENYLIMIDAZOLIUM FLUOBORATE COMPLEX

The procedure of Example 13 was followed using the following reagents:

4.00 g (0.0182 mole) of 4,5-diphenylimidazole (4,5-DPI)

2.92 g (0.0166 mole) of fluoboric acid (55.9 percent aqueous)

7.47 g of methanol

After the above reactants were added together, the mixture was not homogeneous, therefore an additional 35.4 grams of the monomethyl ether of propylene glycol monoacetate was added to give a clear solution containing 11.3 percent by weight of the 4,5-diphenylimidazolium fluoborate adduct/complex.

Examples 18 - 34 IMIDAZOLIUM FLUOBORATE COMPLEX CATALYZED EPOXY/PHENOLIC SYSTEMS

The catalysts described in Examples 1 - 17 were mixed with a 1:1 molar ratio of a diglycidyl ether of bisphenol A having an epoxy equivalent weight of 181.5 and bisphenol A (2,2-bis(4,4'-hydroxyphenyl)-propane), dissolved in the monomethylether of propylene glycol monoacetate (PMA). The epoxy resin (181.5 grams, 1 equiv.), bisphenol A (114 grams, 1 equiv.) and 73.88 grams of PMA are heated between 80°C and 100°C under a nitrogen atmosphere until homogeneous, cooled to ambient temperature and the appropriate amount of catalyst added as described in Table II. Portions of these solutions were then stored at 50°C and the 25°C viscosity monitored as shown in Table III.

**Table II**
CATALYZED EPOXY/PHENOLIC FORMULATIONS

| Example or Comp. Expt. No. | Catalyst (Ex. Number) | Catalyst Solution Weight (grams) | Millimoles of Catalyst per Equivalent of Epoxide |
|---|---|---|---|
| 18 | 1 | 3.92 | 9.0 |
| 19 | 2 | 3.47 | 9.0 |
| 20 | 3 | 3.67 | 9.0 |
| 21 | 4 | 3.75 | 9.0 |
| 22 | 5 | 3.82 | 9.0 |
| 23 | 6 | 4.02 | 9.0 |
| 24 | 7 | 4.12 | 9.0 |
| 25 | 8 | 4.22 | 9.0 |
| 26 | 9 | 4.24 | 9.0 |
| 27* | 10 | 4.31 | 9.0 |
| 28* | 11 | 4.59 | 9.0 |
| 29* | 12 | 4.67 | 9.0 |
| 30 | 13 | 5.31 | 9.0 |
| 31 | 14 | 4.00 | 9.0 |
| 32 | 15 | 4.33 | 9.0 |
| 33 | 16 | 4.65 | 9.0 |
| 34 | 17 | 24.65 | 9.0 |
| C. E.[a] A* | No Cat. | ------- | ------- |
| C. E.[a] B* | 2-MI[b] | 1.85 | 9.0 |
| C. E.[a] C* | 2-PI[c] | 3.24 | 9.0 |
| C. E.[a] D* | 1,2-DMI[d] | 2.16 | 9.0 |

*Not an example of the present invention.
[a]C. E. is Comparative Experiment.
[b]2-methyl imidazole alone as catalyst. (40% by wt. solution in methanol)
[c]2-phenylimidazole alone as catalyst. (40% by wt. solution in methanol)
[d]1,2-dimethylimidazole alone as catalyst. (40% by wt. solution in methanol)

## Table III - 50°C Stability Study

| Ex. or CE[a] | Nitrogen or Phosporus Cont. Compound | Mol. of $HBF_4$ per Mol. of N-Cont. Cmpd. | Viscosity | | | | | | % of Control Viscosity[d] | |
|---|---|---|---|---|---|---|---|---|---|---|
| | | | Initial | | After 1 Day | | After 14 Days | | After 1 Day | After 14 Days |
| | | | Cps | Pa•s | Cps | Pa•s | Cps | Pa•s | | |
| 18 | 2-MI | 0.98 | 885 | .885 | 1054 | 1.054 | 1385 | 1.385 | 10.5 | <0.7 |
| 19 | 2-MI | 0.75 | 914 | .914 | 1361 | 1.361 | N.D. | N.D. | 13.6 | N.D. |
| 20 | 2-MI | 0.84 | 904 | .904 | 1211 | 1.211 | 24150 | 24.150 | 12.1 | <12.1 |
| 21 | 2-MI | 0.89 | 891 | .891 | 1144 | 1.144 | 8890 | 8.890 | 11.4 | <4.4 |
| 22 | 2-MI | 0.93 | 887 | .887 | 1085 | 1.085 | 3120 | 3.120 | 10.8 | <1.6 |
| 23 | 2-MI | 1.03 | 877 | .887 | 1032 | 1.032 | 1251 | 1.251 | 10.3 | <0.6 |
| 24 | 2-MI | 1.07 | 840 | .840 | 957 | .957 | 1168 | 1.168 | 9.6 | <0.6 |
| 25 | 2-MI | 1.12 | 836 | .836 | 987 | .987 | 2919 | 2.919 | 9.9 | <1.5 |
| 26* | 2-MI | 1.14 | 1360 | 1.360 | >200,000[b] | >200[b] | N.D. | N.D. | N/A | N.D. |

Table III (contd.) - 50°C Stability Study

| Ex. or CE[a] | Nitrogen or Phosporus Cont. Compound | Mol. of $HBF_4$ per Mol. of N-Cont. Cmpd. | Viscosity | | | | | | % of Control Viscosity[d] | |
|---|---|---|---|---|---|---|---|---|---|---|
| | | | Initial | | After 1 Day | | After 14 Days | | After 1 Day | After 14 Days |
| | | | Cps | Pa•s | Cps | Pa•s | Cps | Pa•s | | |
| 27* | 2-MI | 1.17 | 1243 | 1.243 | >200,000[b] | >200[b] | --- | --- | >1999 | --- |
| 28* | 2-MI | 1.30 | 1715 | 1.715 | >200,000[b] | >200[b] | --- | --- | >1999 | --- |
| 29* | 2-MI | 1.35 | 2000[e] | 2.000[e] | >200,000[b] | >200[b] | --- | --- | >1999 | --- |
| 30 | 2-PI | 0.98 | 820 | .820 | 980 | .980 | 1404 | 1.404 | 7.0 | --- |
| 31 | 4-MI | 1.02 | 867 | .867 | 1020 | 1.020 | 1179 | 1.179 | --- | --- |
| 32 | 1,2-DMI | 1.03 | 836 | .836 | 932 | .932 | 1260 | 1.260 | 7.6 | <0.6 |
| 33 | 2-E-4-MI | 1.02 | 828 | .828 | 897 | .897 | 1140 | 1.140 | --- | --- |

**Table III (contd.) - 50°C Stability Study**

| Ex. or CE[a] | Nitrogen or Phosporus Cont. Compound | Mol. of $HBF_4$ per Mol. of N-Cont. Cmpd. | Viscosity | | | | | | % of Control Viscosity[d] | |
|---|---|---|---|---|---|---|---|---|---|---|
| | | | Initial | | After 1 Day | | After 14 Days | | After 1 Day | After 14 Days |
| | | | Cps | Pa•s | Cps | Pa•s | Cps | Pa•s | | |
| 34 | 4,5-DPI | 1.03 | 417 | .417 | 576 | .576 | 742 | .742 | --- | --- |
| A* | None | 0 | 1079 | 1.079 | 1081 | 1.081 | 1256 | 1.256 | --- | --- |
| B* | 2-MI[c] | 0 | 1006 | 1.006 | 10,006 | 10.006 | >200,000[b] | >200[b] | --- | --- |
| C* | 2-PI[c] | 0 | 1042 | 1.042 | 14,000 | 14.000 | --- | --- | --- | --- |
| D* | 1,2-DMI[c] | 0 | 1171 | 1.171 | 12,228 | 12,228 | >200,000[b] | >200[b] | --- | --- |

FOOTNOTES TO TABLE III

| | |
|---|---|
| * | Not an example of the present invention. |
| a | Examples are designated by numerals whereas comparative experiments are designated by letters. |
| b | Viscosity of the composition exceeded the test method (>200,000 cps). |
| c | 2-Methylimidazole, 2-phenylimidazole and 1,2-dimethylimidazole employed alone as catalyst. |
| d | This value was determined by dividing the viscosity obtained in the appropriate example by the viscosity of a comparable formulation employing as the catalyst the same nitrogen or phosphorus compound except that it had not been reacted with $HBF_4$. |
| e | The viscosity was increasing during measurement. |

Example 35 COATING PROPERTIES WITH 2-METHYL-IMIDAZOLIUM FLUOBORATE CATALYST

The formulations described in Example 18 and Comparative Experiment B were applied to 24 gauge Bonderite™ R 90 treated steel panels available from Parker Chemical Co. via a wire wound steel draw down rod. The coatings were allowed to air dry for approximately five minutes, then placed in a forced air oven preset at 200°C for 10 minutes. The panels were removed from the oven, cooled to ambient temperature, and tested as shown in Table IV.

Resistance to methyl ethyl ketone was determined in the following manner. The ball end of a ball peen hammer weighing about 1.5 lbs. (0.6804 kg) was covered with 8 plies of gauze, which was then wet with methyl ethyl ketone (MEK). The ball end of the hammer was applied to the coated surface and rubbed back and forth until the coating was removed. One double rub corresponded to one back and forth movement of the hammer. The number of double rubs required to remove or mar the coating was recorded.

Flexibility was determined by a 1/8 in. (3.175 mm) wedge test using a Gardner Falling Dart Impact Tester (available from the Gardner Laboratory, Inc., Bethesda, Maryland) configured for 0 to 1/8 in. (0 to 3.175 mm) wedge bend test. The bottom 3/4 in. (19.05 mm) of the panel was bent 180° over itself, exposing the coating to the outer surface, then sandwiched between two non-parallel steel plates that were hinged such that when completely together, they form a zero to 1/8 in. (0 to 3.175 mm) gap. The top plate was then impacted with the blunt end of the falling dart until the panel was bent from a zero to 1/8 in. (0 to 3.175 mm) wedge. The coated area over the bend was then wiped for approximately one minute with a 10 percent $CuSO_4$/1N HCl solution which turned a copper-red color where the coating had failed and exposed steel metal. The percent pass value given in Table IV was calculated as the number of inches from the 1/8 in. (0 to 3.175 mm) end to the point of failure, as evidenced by the copper-red color, divided by the total 4 in. (101.6 mm) total length times 100.

Table IV
COATING PROPERTIES OF CATALYZED SYSTEMS

| SAMPLE NUMBER | FORMULATIONS FROM EXAMPLE OR COMP. EXPT. | MEK DOUBLE RUBS | GARDNER IMPACT | | 1/8 in. WEDGE BEND % Pass |
|---|---|---|---|---|---|
| | | | in.-lbs. | J | |
| I | 18 | 30-50 | >180 | >20.34 | 100 |
| II* | C.E.aB | >100 | >180 | >20.34 | 100 |

*Not an example of the present invention.
aC.E. is Comparative Experiment.

Example 36 CLEAR CASTING PROPERTIES WITH IMIDAZOLIUM FLUOBORATE CATALYST

Tetrabromobisphenol A 136 grams (0.5 equivalents), 181.5 grams (1.0 equivalent) of a diglycidyl ether of bisphenol A having an epoxy equivalent weight of 181.5, 4.3 grams (0.1 equivalent) of sulfanilamide, 24.8 grams (0.4 equivalents) were stirred at 100°C to 130°C until homogeneous, then 0.871 grams (2.0 millimoles) of the catalyst described in Example 1 was added. The mixture was stirred until homogeneous, degassed via evacuation for approximately one minute, then poured into preheated aluminum molds spaced 1/8 inch (3.175 mm) apart. The castings were cured for 16 hours at 150°C, followed by three hours at 200°C. The casting was then cooled and removed from the aluminum mold for testing as shown in Table V, Example 36.

Example 37 CLEAR CASTING PROPERTIES WITH TETRABUTYLPHOSPHONIUM FLUOBORATE CATALYST

Example 36 was repeated using 1.84 g (2.0 millimoles) of the catalyst described in Example 52. The testing results are shown in Table V, Example 37.

In these experiments, toughness was reported as the stress intensification factor, $K_q$. The method for measuring $K_q$ was an adaptation of ASTM E 399-83 for plastics materials from the original usage with metals. The compact tension test was now widespread in usage and was described in the J. Mater. Sci., Vol., 16, 2657, 1981. An individual test piece was cut as an approximate 1 inch (25.4 mm) square from a flat casting usually of 1/8 inch (3.175 mm) thickness. A dovetail notch was cut into one edge, centered, about 1/4 inch (6.25 mm) in depth. Next, a razor blade was inserted into this notch and tapped to produce a precrack. Two holes were then drilled adjacent to the dovetail as indicated in ASTM E 399-83, allowing the test piece to be pinned into position in the Instron test machine. Extension of the sample now allows the force required to propagate opening of the precrack to be measured, using a test speed of 0.02 inches/minute (0.0085 mm/sec.). This force was used in the equation given in ASTM E-399, along with the required sample dimensions and actual precrack length, to calculate a "stress intensification factor", KQ. This method was described by Lee, L.H. in Physicochemical Aspects of Polymer Surfaces, K.L. Mittal, ed., Plenum Press, New York, N.Y., 1983.

In these experiments, glass transition temperature (Tg) was measured by differential scanning calorimetry (DSC) using a calibrated DuPont Instrument (Model No. 912 with a 1090 controller). Samples were run under a nitrogen atmosphere with a temperature ramp of 10°C per minute (0.1667°C/sec.).

Table V

| CLEAR CASTING PROPERTIES OF CURED RESIN COMPOSITIONS | | | | |
|---|---|---|---|---|
| EXAMPLE NUMBER | CATALYST FROM EXAMPLE OR COMP. EXPT. | Glass Trans. Temp. °C | Toughness Kq | |
| | | | psi x $in^{0.5}$ | MPa·$M^{0.5}$ |
| 36 | 1 | 154 | 890 | 0.979 |
| 37 | 52 | 145 | 990 | 1.089 |

Example 38 PREPARATION OF ETHYLTRIPHENYLPHOSPHONIUM FLUOBORATE COMPLEX

A glass flask fitted with a stirrer, thermometer, and reflux condenser was charged with 11.4 grams of a 71.9 percent methanol solution, by weight, of ethyltriphenylphosphonium acetate·acetic acid (ETPPA·HAc) complex (0.0200 moles). To this stirred solution, 3.682 grams (0.0224 moles) of a 53.4 percent by weight aqueous solution of fluoboric acid (1.12 moles per mole of ETPPA·HAc) were slowly added during about five minutes. The heat from the reaction warmed the solution to approximately 50°C. The solution was stirred for an additional 30 minutes as it cooled to near ambient temperature. Methanol was then added, 10.22 grams, to dilute the solution to 40 percent solids based on the weight of the ethyltriphenylphosphonium fluoborate complex.

The weight percent of ETTPA·HAc in methanol was determined by titration of the acetate group with 0.1006 N perchloric acid ($HClO_4$) in acetic acid to a crystal violet endpoint (blue to green endpoint). It required 12.80 ml (0.001280 moles) of perchloric acid solution to titrate 0.7295 g of ETPPA·HAc/methanol solution dissolved in 15 ml of dichloromethane, which calculated to 71.9 weight percent of ETPPA·HAc in methanol.

Examples 39-45 PREPARATION OF ETHYLTRIPHENYLPHOSPHONIUM FLUOBORATE COMPLEXES

The procedure described in Example 38 was repeated using the same procedure and amount of ETPPA·HAc, however the weight of fluoboric acid (53.4 percent aqueous solution) was varied as shown in Table IV. All experiments were diluted with methanol to 40 percent solids based on the combined weights of ETPPA·HAc and fluoboric acid.

TABLE IV
ETHYLTRIPHENYLPHOSPHONIUM FLUOBORATE COMPLEXES WITH VARYING RATIOS OF FLUOBORIC ACID

| EXAMPLE NUMBER | FLUOBORIC ACID SOL. (grams) | MOLES FLUOBORIC ACID PER MOLE OF ETPPA•HAc |
|---|---|---|
| 39 | 3.123 | 0.95 |
| 40 | 3.353 | 1.02 |
| 41 | 3.517 | 1.07 |
| 38 | 3.682 | 1.12 |
| 42 | 3.876 | 1.17 |
| 43 | 4.010 | 1.22 |
| 44 | 4.175 | 1.27 |
| 45 | 4.339 | 1.32 |
| C.E.[a]E* | 0.0[b] | 0.0 |

*Not an example of the present invention.
[a]C.E. is Comparative Experiment.
[b]Ethyltriphenylphosphonium acetate•acetic acid complex alone as catalyst.

Example 46 PREPARATION OF TETRABUTYLPHOSPHONIUM FLUOBORATE COMPLEX

A glass flask fitted with a stirrer, thermometer, and reflux condenser was charged with 6.20 grams (0.01 moles) of a 60.9 percent methanol solution, by weight, of tetrabutylphosphonium acetate·acetic acid complex (TBPA·HAc). To this stirred solution, 2.00 grams (0.0122 moles) of a 53.4 percent by weight aqueous solution of fluoboric acid (1.22 moles per mole of TBPA·HAc) were slowly added during about five minutes. The heat from the reaction warmed the solution to approximately 50°C. The solution was stirred for an additional 30 minutes as it cooled to near ambient temperature. Methanol was then added, 3.916 grams, to dilute the solution to 40 percent solids based on the weight of the tetrabutylphosphonium fluoborate complex.

The weight percent of TBPA·HAc in methanol was determined by titration of the acetate group with 0.1006 N perchloric acid ($HClO_4$) in acetic acid to a crystal violet endpoint (blue to green endpoint). It required 10.15 ml (0.001015 moles) of perchloric acid solution to titrate 0.6301 g of TBPA·HAc/methanol dissolved in 15 ml of dichloromethane, which calculated to 60.9 weight percent TBPA·HAc in methanol.

Examples 47-54 PREPARATION OF TETRABUTYLPHOSPHONIUM FLUOBORATE COMPLEXES

The procedure described in Example 46 was repeated using the same procedure and amount of tetrabutylphosphonium acetate·acetic acid complex (TBPA.HAc), however the weight of fluoboric acid (53.42 percent aqueous solution) was varied as shown in Table V. All experiments were diluted with methanol to 40 percent solids based on the combined weights of TBPA.HAc and fluoboric acid.

TABLE V
TETRABUTYLPHOSPHONIUM FLUOBORATE COMPLEXES WITH VARYING RATIOS OF FLUOBORIC ACID

| EXAMPLE NUMBER | FLUOBORIC ACID SOL. (grams) | MOLES FLUOBORIC ACID PER MOLE OF TBPA•HAc |
|---|---|---|
| 47 | 1.56 | 0.95 |
| 48 | 1.67 | 1.02 |
| 49 | 1.759 | 1.07 |
| 50 | 1.84 | 1.12 |
| 51 | 1.923 | 1.17 |
| 46 | 2.005 | 1.22 |
| 52 | 2.05 | 1.25 |
| 53 | 2.087 | 1.27 |
| 54 | 2.17 | 1.32 |
| C.E.[a]F* | 0.0[b] | 0.0 |

*Not an example of the present invention.
[a]C.E. is Comparative Experiment.
[b]Tetrabutylphosphonium acetate•acetic acid complex alone as catalyst.

Examples 55-63 PREPARATION OF OTHER FLUOBORATE COMPLEXES

The procedure of Example 38 was followed, using a ratio of 1.02 moles of fluoboric acid per equivalent of nitrogen containing compound as described in Table VI. Methanol was added to bring the percent solids based on the amine compound·fluoborate complex to 40 percent by weight.

TABLE VI

| TETRABUTYLPHOSPHONIUM FLUOBORATE COMPLEXES WITH VARYING RATIOS OF FLUOBORIC ACID | |
|---|---|
| EXAMPLE NUMBER | NITROGEN CONTAINING COMPOUND |
| 55 | PYRROLIDINE |
| 56 | N-METHYLMORPHOLINE |
| 57 | MORPHOLINE |
| 58 | BUTYLAMINE |
| 59 | DIBUTYLAMINE |
| 60 | TRIBUTYLAMINE |
| 61 | DIETHYLANILINE |
| 62 | 1-METHYLPYRROLIDINE |
| 63 | PYRIDINE |

Example 64 FLUOBORATE COMPLEX VIA SILVER FLUOBORATE

Vacuum dried tetrabutylphosphonium chloride, 1.82 grams (0.0062 moles) was dissolved in 5.84 grams of methanol and added dropwise to 1.20 grams (0.0062 moles) of silver fluoborate dissolved in 3.46 grams of methanol. The suspension was stirred at 25°C for 30 minutes, and the silver chloride removed by filtration. The tetrabutylphosphonium fluoborate solution was concentrated to 40 percent solids by weight via vacuum removal of the excess methanol.

Example 65 FLUOBORATE COMPLEX CATALYZED EPOXY/PHENOLIC SYSTEMS

The catalysts described in Examples 38 to 64 were mixed with a 1:1 molar ratio of a diglycidyl ether of bisphenol A having an epoxy equivalent weight of 181.5 and bisphenol A (2,2-bis(4,4'-hydroxyphenyl)-propane, dissolved in the monomethylether of propylene glycol monoacetate (PMA). The epoxy resin (181.5 grams), bisphenol A (114 grams) and 73.88 grams of PMA were heated to 80-100°C under a nitrogen atmosphere until homogeneous, cooled to ambient temperature and 9.0 millimoles of catalyst added to 1.00 equivalent of epoxide in a manner that is described previously for Examples 18-34. Portions of these solutions were then stored at 50°C and the 25°C viscosity monitored as shown in Table VII.

Table VII - 50°C Stability Study

| Catalyst from Ex. or CE[a] | Phosporus Cont. Compound | Mol. of $HBF_4$ per Mol. of P Cont. Cmpd. | Viscosity | | | | | | % of Control Viscosity[f] | |
|---|---|---|---|---|---|---|---|---|---|---|
| | | | Initial | | After 1 Day | | After 14 Days | | After 1 Day | After 14 Days |
| | | | Cps | Pa•s | Cps | Pa•s | Cps | Pa•s | | |
| 39 | ETPPA•HAc | 0.95 | 364 | .364 | 460 | .460 | --- | --- | <0.2 | --- |
| 40 | ETPPA•HAc | 1.02 | 366 | .366 | 408 | .408 | 13565 | 13.565 | <0.2 | <6.8 |
| 41 | ETPPA•HAc | 1.07 | 356 | .356 | 385 | .385 | 1014 | 1.014 | <0.2 | <0.5 |
| 38 | ETPPA•HAc | 1.12 | 348 | .348 | 370 | .370 | 543 | .543 | <0.2 | <0.3 |
| 42 | ETPPA•HAc | 1.17 | 348 | .348 | 391 | .391 | 623 | .623 | <0.2 | <0.3 |
| 43 | ETPPA•HAc | 1.22 | 436 | .436 | 749 | .749 | 1352 | 1.352 | <0.4 | <0.7 |
| 44 | ETPPA•HAc | 1.27 | 755 | .755 | 3204 | .3204 | --- | --- | <1.6 | --- |
| 45 | ETPPA•HAc | 1.32 | 2211 | 2.211 | 10000 | 10.000 | --- | --- | <5.0 | --- |

Table VII (contd.) - 50°C Stability Study

| Catalyst from Ex. or CE[a] | Phosporus Cont. Compound | Mol. of $HBF_4$ per Mol. of P Cont. Cmpd. | Viscosity | | | | | | % of Control Viscosity[f] | |
|---|---|---|---|---|---|---|---|---|---|---|
| | | | Initial | | After 1 Day | | After 14 Days | | After 1 Day | After 14 Days |
| | | | Cps | Pa•s | Cps | Pa•s | Cps | Pa•s | | |
| 47 | TBPA•HAc | 0.95 | 401 | .401 | 570 | .570 | --- | --- | 1.2 | --- |
| 48 | TBPA•HAc | 1.02 | 389 | .389 | 460 | .460 | --- | --- | 1.0 | --- |
| 49 | TBPA•HAc | 1.07 | 383 | .383 | 444 | .444 | 24378 | 24.378 | .9 | 12.2 |
| 50 | TBPA•HAc | 1.12 | 377 | .377 | 430 | .430 | 6490 | 6.490 | .9 | 3.2 |
| 51 | TBPA•HAc | 1.17 | 387 | .387 | 407 | .407 | 733 | .733 | .9 | .4 |
| 46 | TBPA•HAc | 1.22 | 376 | .376 | 393 | .393 | 572 | .572 | .8 | .3 |
| 52 | TBPA•HAc | 1.25 | 540 | 0.540 | 1457 | 1.457 | --- | --- | 0.7 | --- |
| 53 | TBPA•HAc | 1.27 | 385 | .385 | 462 | .462 | 841 | .841 | 1.0 | .4 |
| 54 | TBPA•HAc | 1.32 | 407 | .407 | 936 | .936 | 5900 | 5.900 | 2.0 | 3.0 |

**Table VII (contd.) - 50°C Stability Study**

| Cat-alyst fromE x. or CE[a] | Nitrogen Cont. Compound | Mol. of $HBF_4$ per Mol. of N Cont. Cmpd. | Viscosity | | | | | | % of Control Viscosity[f] | |
|---|---|---|---|---|---|---|---|---|---|---|
| | | | Initial | | After 1 Day | | After 14 Days | | After 1 Day | After 14 Days |
| | | | Cps | Pa•s | Cps | Pa•s | Cps | Pa•s | | |
| 55 | Pyrrolidine | 1.03 | 830 | 0.830 | 1136 | 1.136 | 1416 | 1.416 | --- | --- |
| 56 | N-methyl morpholine | 1.03 | 718 | 0.718 | 845 | 0.845 | 1113 | 1.113 | 3.1 | <5.6 |
| 57 | Morpholine | 1.03 | 833 | 0.833 | 997 | 0.997 | 1412 | 1.412 | --- | --- |
| 58 | Butyl amine | 1.03 | 720 | .720 | 889 | 0.889 | 1268 | 1.268 | --- | --- |
| 59 | Dibutyl amine | 1.03 | 602 | .602 | 684 | 0.684 | 1049 | 1.049 | 3.4 | .5 |
| 60 | Tributyl amine | 1.03 | 494 | .494 | 580 | 0.580 | 849 | 0.849 | --- | --- |
| C.E.I * | 4-Phenyl morpholine | 1.03 | 688 | .688 | >2000[g] | >200[g] | --- | --- | --- | --- |
| 61 | N,N-Diethyl-aniline | 1.03 | 667 | .667 | 865 | 0.865 | --- | --- | --- | --- |

**Table VII (contd.) - 50°C Stability Study**

| Catalyst from Ex. or CE[a] | Nitrogen Cont. Compound | Mol. of $HBF_4$ per Mol. of N Cont. Cmpd. | Viscosity | | | | | | % of Control Viscosity[f] | |
|---|---|---|---|---|---|---|---|---|---|---|
| | | | Initial | | After 1 Day | | After 14 Days | | After 1 Day | After 14 Days |
| | | | Cps | Pa•s | Cps | Pa•s | Cps | Pa•s | | |
| 62 | 1-Methyl pyrrolidine | 1.03 | 663 | .663 | 810 | .810 | 1193 | 1.193 | --- | --- |
| 63 | Pyridine | 1.03 | 733 | .733 | 884 | .884 | 1484 | 1.484 | --- | --- |
| C.E.aE* | ETPPA•HAc[b] | 0 | 1053 | 1.053 | >200,000[g] | >200 | --- | --- | --- | --- |
| C.E.aF* | TBPA•HAc[c] | 0 | 898 | .898 | 47,577 | 47.557 | >200,000[g] | >200 | --- | --- |
| C.E.aG* | Dibutylamine[d] | 0 | 1169 | 1.169 | 20,328 | 20.328 | >200,000[g] | >200 | --- | --- |
| C.E.aH* | N-Methyl-morpholine[e] | 0 | 1330 | 1.330 | 26,999 | 26.999 | >200,000[g] | >200 | --- | --- |

* Not an example of the present invention.
[a] Examples are designated by numerals whereas comparative experiments are designated by letters.
[b] Ethyltriphenylphosphonium acetate·acetic acid complex employed alone as catalyst.
[c] Tetrabutylphosphonium acetate·acetic acid complex employed alone as catalyst.
[d] Dibutylamine employed alone as catalyst.
[e] N-methylmorpholine employed alone as catalyst.
[f] This value is determined by dividing the viscosity obtained in the appropriate example by the viscosity of a comparable formulation employing as the catalyst the same nitrogen or phosphorus compound except that it has not been reacted with $HBF_4$.
[g] Composition viscosity exceeded the test method (>200,000 cps).

## Claims

1. A composition comprising (A) at least one compound containing an average of more than one epoxide group per molecule; (B) at least one compound containing an average of more than one aromatic hydroxyl group per molecule other than an alkenylphenol polymer; and (C) a catalytic quantity of the product resulting from contacting
   (1) at least one compound selected from
      (a) an onium compound of the element nitrogen, phosphorus, sulfur or arsenic,
      (b) a non-heterocyclic amine compound or an acid adduct thereof and
      (c)a heterocyclic nitrogen-containing compound or an acid adduct thereof, with
   (2) at least one compound selected from
      (a) an inorganic acid free of boron or a metal salt thereof, said inorganic acid having a weak-nucleophilic anion,
      (b) an inorganic acid containing boron or a metal salt thereof, said inorganic acid being represented by the formula $BR_3R'$ wherein each R is independently hydrogen or an aliphatic, cycloaliphatic or aromatic hydrocarbyl group having from 1 to 12 carbon atoms or a halogen and R' is a group other than a hydrocarbyl group, and
      (c) any combination of components (a) or (b);

   wherein
   (i) components (C-1) and (C-2) are contacted in quantities which permit the composition to satisfy the viscosity requirements of the composition after storage at 50°C for 14 days;
   (ii) components (A) and (B) are present in quantities which provide a ratio of aromatic hydroxyl groups to epoxide group of from 0.05:1 to 20:1; and
   (iii) a mixture of components (A), (B), and (C), when dissolved in 20 to 40 percent by weight of a suitable solvent or solvent mixture has a viscosity measured at 25°C of 75 percent or less than the viscosity of a like composition except that the catalyst consists only of component (C-1), said viscosity being determined after storage for 14 days at 50°C.

2. A composition of Claim 1, wherein component (A) is a glycidyl ether of dihydroxy phenol, biphenol, bisphenol, halogenated bisphenol, alkylated bisphenol, trisphenol, phenol-aldehyde novolac resin, halogenated phenol-aldehyde novolac resin, alkylated phenol-aldehyde novolac resin, phenolhydroxybenzaldehyde resin, alkylated phenolhydroxybenzaldehyde resin, hydrocarbon-phenol resin, hydrocarbon-halogenated phenol resin, hydrocarbonalkylated phenol resin, aliphatic diol, aliphatic triol, polyetherdiol, polyethertriol, the alkylene oxide adduct of a compound containing an average of more than one aromatic hydroxyl group per molecule, or any combination thereof.

3. A composition of Claim 1, wherein component (B) is a dihydroxy phenol, biphenol, bisphenol, halogenated bisphenol, alkylated bisphenol, trisphenol, phenol-aldehyde novoalac resin, halogenated phenol-aldehyde novolac resin, alkylated phenol-aldehyde novolac resin, phenol-hydroxybenzaldehyde resin, alkylated phenol-hydroxybenzaldehyde resin, hydrocarbon-phenol resin, hydrocarbon-halogenated phenol resin, hydrocarbon-alkylated phenol resin, or any combination thereof.

4. A composition of Claim 1, wherein component (C-1-c) is selected from imidazoles, imidazolidines, imidazolines, oxazoles, pyrroles, thiazoles, pyridines, pyrazines, morpholines, pyridazine, pyrimidine, pyrazoles, quinoxalines, quinazolines, phthalozines, quinolines, purines, indazoles, indoles, indolazines, phenazines, phenarsines, phenothiazines, pyrrolines, indolines, piperidines, piperazines, pyrrolidine or any combination thereof.

5. A composition of Claim 1, wherein component (C-2) is selected from the group consisting of fluoboric acid, fluoarsenic acid, fluoantimonic acid, fluophosphoric acid, chloroboric acid, chloroarsenic acid, chloroantimonic acid, chlorophosphoric acid, perchloric acid, chloric acid, bromic acid, iodic acid, Group I or II metal salts of such acids, and any combination thereof.

6. A catalyst resulting from contacting (1) at least one heterocyclic nitrogen-containing compound other than pyridine or an acid adduct thereof with (2) at least one compound selected from (a) an inorganic acid free of boron or a metal salt thereof, said inorganic acid having a weak-nucleophilic anion, (b) an inorganic acid containing boron or a metal salt thereof, said inorganic acid being represented by the formula $BR_3R'$ wherein each R is independently hydrogen or an aliphatic, cycloaliphatic or aromatic hydrocarbyl

group having from 1 to 12 carbon atoms or a halogen and R' is a group other than a hydrocarbyl group, and (c) any combination of components (a) or (b).

7. The catalyst of Claim 6 wherein components (1) and (2) are contacted in quantities which provide from 0.6 to 1.4 moles of acid or metal acid salt per mole of heterocyclic nitrogen-containing compound or acid adduct of a heterocyclic nitrogen-containing compound.

8. The catalyst of Claim 6 wherein
(a) component (1) is selected from imidazoles, imidazolidines, imidazolines, oxazoles, pyrroles, thiazoles, pyridines, pyrazines, morpholines, pyridazines, pyrimidines, pyrazoles, quinoxalines, quinazolines, phthalozines, quinolines, purines, indazoles, indoles, indolazines, phenazines, phenarsines, phenothiazines, pyrrolines, indolines, piperidines, piperazines, pyrrolidine or any combination thereof; and
(b) component (2) is selected from fluoboric acid, fluoarsenic acid, fluoantimonic acid, fluophosphoric acid, chloroboric acid, chloroarsenic acid, chloroantimonic acid, chlorophosphoric acid, perchloric acid, chloric acid, bromic acid, iodic acid, Group I or Group II metal salt of such acids, or any combination thereof.

9. The catalyst of Claim 8 wherein component (1) is an imidazole represented by the following formula I

Formula I

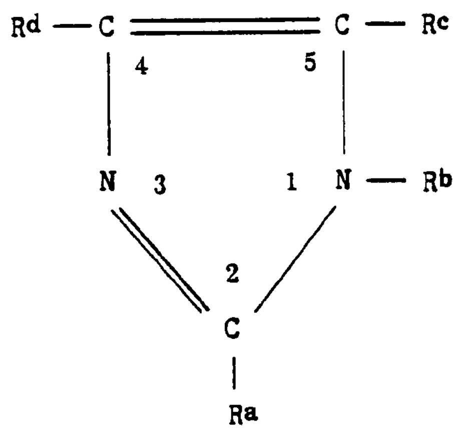

wherein $R^a$ is hydrogen, halogen, cyano or a hydrocarbyl group having from 2 to 18 carbon atoms or such hydrocarbyl groups containing an oxygen, sulfur or halogen substitutent; each $R^b$, $R^c$ and $R^d$ is independently hydrogen, halogen, cyano or a hydrocarbyl group having from 1 to 18 carbon atoms or such hydrocarbyl groups containing an oxygen, sulfur or halogen substituent, or $R^b$ and $R^c$ can combine to form a 5 or 6 membered ring with the carbon and nitrogen atoms from the imidazole ring to which they are attached or $R^c$ and $R^d$ can combine to form a 5 or 6 membered ring with the two carbon atoms from the imidazole ring to which they are attached.

10. The catalyst of Claim 9 wherein said imidazole compound is 2-ethyl-4-methylimidazole, 4-methylimidazole, 1,2-dimethylimidazole, 2-phenylimidazole ,4,5-diphenylimidazole, or any combination thereof.

11. The catalyst of Claim 9 which is represented by the following formula I'

Formula I'

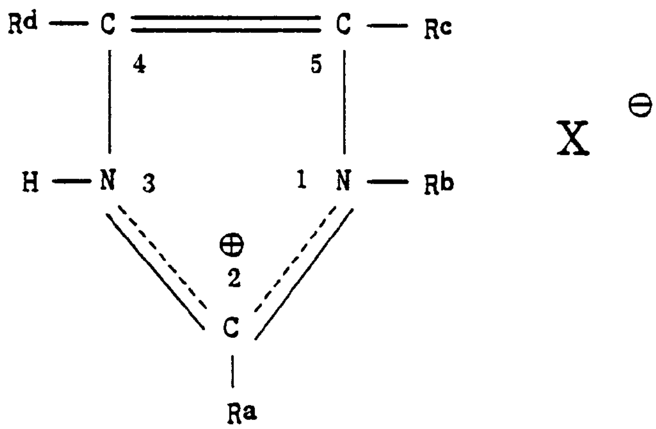

wherein $R^a$ is hydrogen or a hydrocarbyl group having from 2 to 18 carbon atoms or such hydrocarbyl groups containing an oxygen, sulfur or halogen substitutent; each $R^b$, $R^c$ and $R^d$ is independently hydrogen or a hydrocarbyl group having from 1 to 18 carbon atoms or such hydrocarbyl groups containing an oxygen, sulfur or halogen substituent, or $R^b$ and $R^c$ can combine to form a 5 or 6 membered ring with the carbon and nitrogen atoms from the imidazole ring to which they are attached or $R^c$ and $R^d$ can combine to form a 5 or 6 membered ring with the two carbon atoms from the imidazole ring to which they are attached; and X is the anion portion of (a) an inorganic acid free of boron having a weak nucleophilic anion or (b) a boron containing inorganic acid represented by the formula $HBR_3R'$ wherein each R is independently hydrogen or an aliphatic, cycloaliphatic or aromatic hydrocarbyl group having from 1 to 12 carbon atoms or a halogen and R' is a halogen.

**12.** The catalyst of Claim 8 wherein said heterocyclic nitrogen-containing compound is a pyrazole compound represented by the following formula II

Formula II.

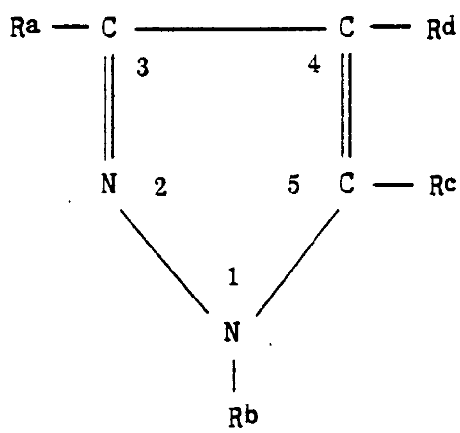

wherein each $R^a$, $R^b$, $R^c$ and $R^d$ is independently hydrogen or a hydrocarbyl group having from 1 to 18 carbon atoms or such hydrocarbyl groups containing an oxygen, sulfur or halogen substituent, or $R^b$ and $R^c$ can combine to form a 5 or 6 membered ring with the carbon and nitrogen atoms from the pyrazole ring to which they are attached or $R^c$ and $R^d$ can combine to form a 5 or 6 membered ring with the two carbon atoms from the pyrazole ring to which they are attached.

**13.** The catalyst of Claim 8 wherein said heterocyclic nitrogen-containing compound is an oxazole represented by the following formula III

Formula III.

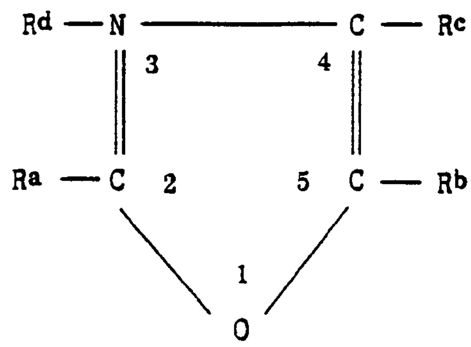

wherein each $R^a$, $R^b$, $R^c$ and $R^d$ is independently hydrogen, halogen, cyano or a hydrocarbyl group having from 1 to 18 carbon atoms or such hydrocarbyl groups containing an oxggen, sulfur, cyano or halogen substituent.

**14.** The catalyst of Claim 8 wherein said heterocyclic nitrogen-containing compound is an imidazolidine compound represented by the following formula IV

Formula IV.

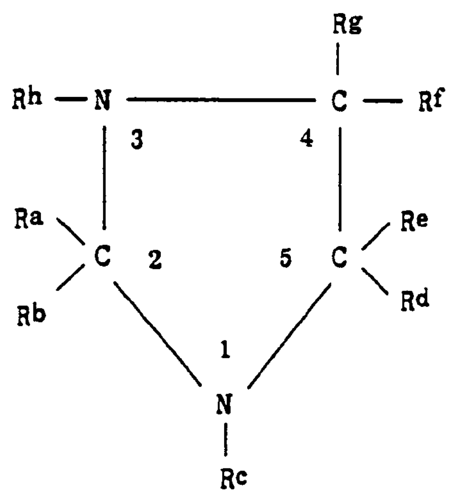

wherein each $R^a$, $R^b$, $R^c$, $R^d$, $R^e$, $R^f$, $R^g$ and $R^h$ is independently hydrogen or a hydrocarbyl group having from 1 to 18 carbon atoms or such hydrocarbyl groups containing an oxygen, sulfur or halogen or the like substituent.

**15.** The catalyst of Claim 8 wherein said heterocyclic nitrogen-containing compound is an imidazoline compound represented by the following formula V

Formula V.

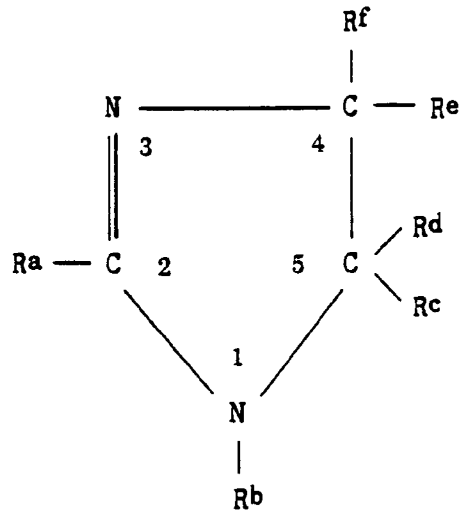

wherein each $R^a$, $R^b$, $R^c$, $R^d$, $R^e$ and $R^f$ is independently hydrogen or a hydrocarbyl group having from 1 to 18 carbon atoms or such hydrocarbyl groups containing an oxygen, sulfur or halogen substituent.

**16.** The catalyst of Claim 8 wherein said heterocyclic nitrogen-containing compound is a thiazole compound represented by the following formula VI

Formula VI

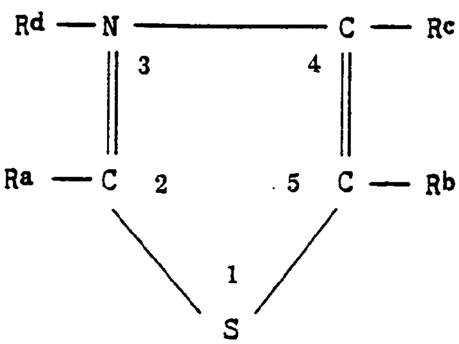

wherein each $R^a$, $R^b$, $R^c$ and $R^d$ is independently hydrogen, halogen, cyano or a hydrocarbyl group having from 1 to 18 carbon atoms or such hydrocarbyl groups containing an oxygen, sulfur, cyano or halogen substituent.

**17.** The catalyst of Claim 8 wherein said heterocyclic nitrogen-containing compound is a pyrrole compound represented by the following formula VII

Formula VII.

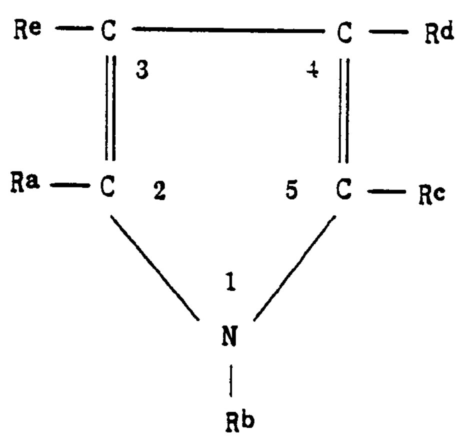

wherein each $R^a$, $R^b$, $R^c$, $R^d$ and $R^e$ is independently hydrogen or a hydrocarbyl group having from 1 to 18 carbon atoms or such hydrocarbyl groups containing an oxygen, sulfur, cyano or halogen substituent.

**18.** The catalyst of Claim 8 wherein said heterocyclic nitrogen-containing compound is a pyridine compound represented by the following formula VIII

Formula VIII

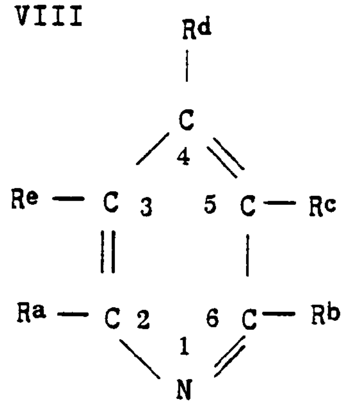

wherein each $R^a$, $R^b$, $R^c$, $R^d$ and $R^e$ is independently hydrogen, halogen, cyano or a hydrocarbyl group having from 1 to 18 carbon atoms or such hydrocarbyl groups containing an oxygen, sulfur or halogen substituent with the proviso that at least one of the $R^a$, $R^b$, $R^c$, $R^d$ or $R^e$ is other than hydrogen.

**19.** The catalyst of Claim 8 wherein said heterocyclic nitrogen-containing compound is a pyrazine compound represented by the following formula IX

Formula IX

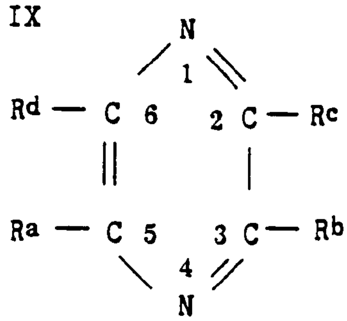

wherein each $R^a$, $R^b$, $R^c$ and $R^d$ is independently hydrogen, or a hydrocarbyl group having from 1 to 18 carbon atoms or such hydrocarbyl groups containing an oxygen, sulfur, cyano or halogen substituent.

**20.** The catalyst of Claim 8 wherein said heterocyclic nitrogen-containing compound is a pyridazine compound represented by the following formula X

Formula X

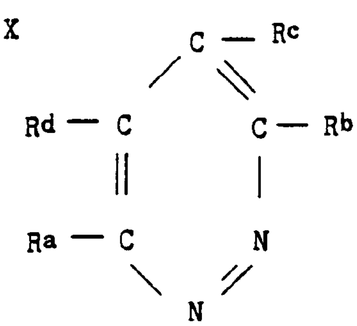

wherein each $R^a$, $R^b$, $R^c$, and $R^d$ is independently hydrogen, or a hydrocarbyl group having from 1 to 18

carbon atoms or such hydrocarbyl groups containing an oxygen, sulfur, cyano or halogen substituent.

**21.** The catalyst of Claim 8 wherein said heterocyclic nitrogen-containing compound is a pyrrolidine compound represented by the following formula XI

Formula XI.

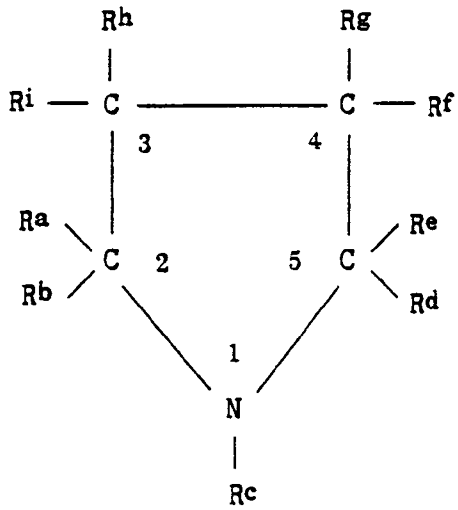

wherein each $R^a$, $R^b$, $R^c$, $R^d$, $R^e$, $R^f$, $R^g$, $R^h$ and $R^i$ is independently hydrogen, halogen, cyano or a hydrocarbyl group having from 1 to 18 carbon atoms or such hydrocarbyl groups containing an oxygen, sulfur or halogen substituent.

**22.** The catalyst of Claim 8 wherein said heterocyclic nitrogen-containing compound is a morpholine compound represented by the following formula XII

Formula XII.

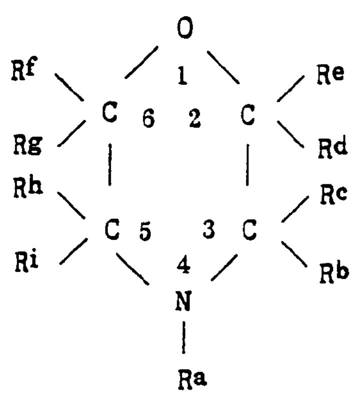

wherein $R^a$ is hydrogen, a hydrocarbyl group having from 2 to 18 carbon atoms or such hydrocarbyl groups containing an oxygen, sulfur, or halogen substituent; each $R^b$, $R^c$, $R^d$, $R^e$, $R^f$, $R^g$, $R^h$ and $R^i$ is independently hydrogen, halogen, cyano or a hydrocarbyl group having from 1 to 18 carbon atoms or such hydrocarbyl groups containing an oxygen, sulfur, halogen or the like substituent.

**23.** The catalyst of Claim 8 wherein said heterocyclic nitrogen-containing compound is a pyrimidine compound represented by the following formula XIII

Formula XIII.

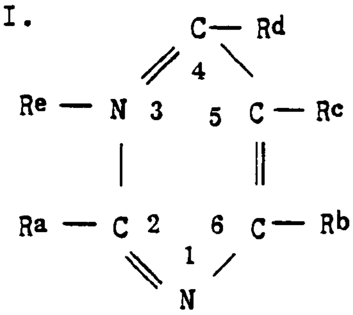

wherein each $R^a$, $R^b$, $R^c$, $R^d$, and $R^e$ is independently hydrogen, or a hydrocarbyl group having from 1 to 18 carbon atoms or such hydrocarbyl groups containing an oxygen, sulfur, cyano or halogen substituent.

**24.** The catalyst of Claim 8 wherein said heterocyclic nitrogen-containing compound is a quinoxaline compound represented by the following formula XIV

Formula XIV.

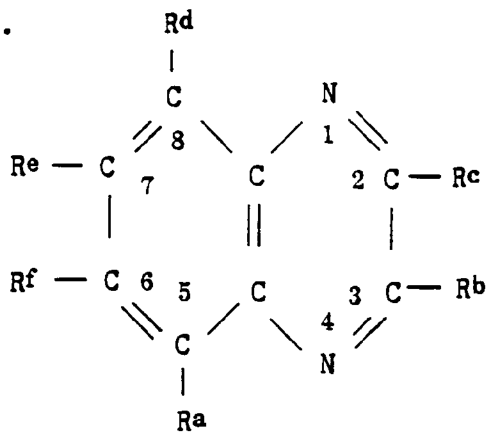

wherein each $R^a$, $R^b$, $R^c$, $R^d$, $R^e$, and $R^f$ is independently hydrogen, or a hydrocarbyl group having from 1 to 18 carbon atoms or such hydrocarbyl groups containing an oxygen, sulfur, cyano or halogen substituent.

**25.** The catalyst of Claim 8 wherein said heterocyclic nitrogen-containing compound is a quinazoline compound represented by the following formula XV

Formula XV.

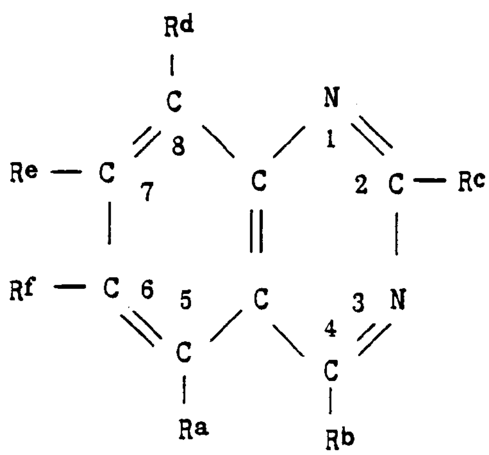

wherein each $R^a$, $R^b$, $R^c$, $R^d$, $R^e$, and $R^f$ is independently hydrogen, or a hydrocarbyl group having from 1 to 18 carbon atoms or such hydrocarbyl groups containing an oxygen, sulfur, cyano or halogen substituent.

**26.** The catalyst of Claim 8 wherein said heterocyclic nitrogen-containing compound is a phthalozine compound represented by the following formula XVI

Formula XVI

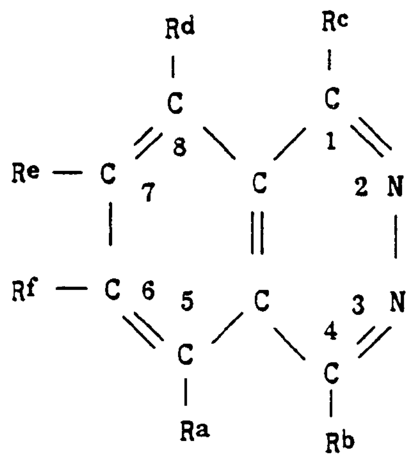

wherein each $R^a$, $R^b$, $R^c$, $R^d$, $R^e$, and $R^f$ is independently hydrogen, or a hydrocarbyl group having from 1 to 18 carbon atoms or such hydrocarbyl groups containing an oxygen, sulfur, cyano or halogen substituent.

**27.** The catalyst of Claim 8 wherein said heterocyclic nitrogen-containing compound is a quinoline compound represented by the following formula XVII

Formula XVIII.

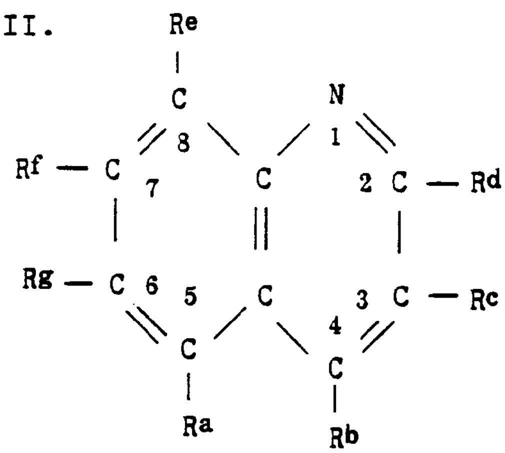

wherein each $R^a$, $R^b$, $R^c$, $R^d$, $R^e$, $R^f$ and $R^g$ is independently hydrogen, or a hydrocarbyl group having from 1 to 18 carbon atoms or such hydrocarbyl groups containing an oxygen, sulfur, cyano or halogen substituent.

**28.** The catalyst of Claim 8 wherein said heterocyclic nitrogen-containing compound is a purine compound represented by the following formula XVIII

Formula XVIII

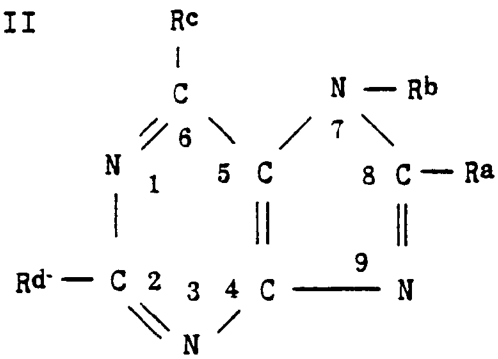

wherein each $R^a$, $R^b$, $R^c$ and $R^d$ is independently hydrogen, or a hydrocarbyl group having from 1 to 18 carbon atoms or such hydrocarbyl groups containing an oxygen, sulfur, cyano or halogen or the like substituent.

**29.** The catalyst of Claim 8 wherein said heterocyclic nitrogen-containing compound is an indazole compound represented by the following formula XIX

Formula XIX

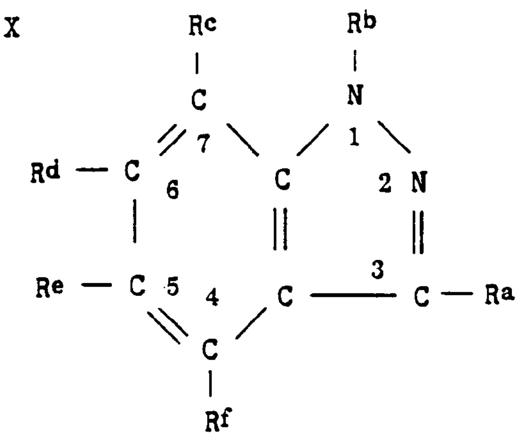

wherein each $R^a$, $R^b$, $R^c$, $R^d$, $R^e$ and $R^f$ is independently hydrogen, or a hydrocarbyl group having from 1 to 18 carbon atoms or such hydrocarbyl groups containing an oxygen, sulfur, cyano or halogen substituent.

**30.** The product of Claim 8 wherein said heterocyclic nitrogen-containing compound is an indole compound represented by the following formula XX

Formula XX.

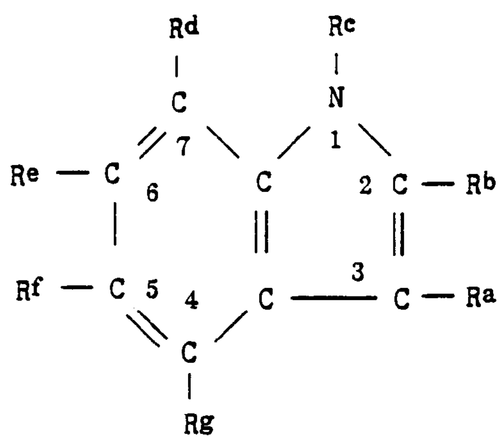

wherein each $R^a$, $R^b$, $R^c$, $R^d$, $R^e$, $R^f$ and $R^g$ is independently hydrogen, or a hydrocarbyl group having from 1 to 18 carbon atoms or such hydrocarbyl groups containing an oxygen, sulfur, cyano or halogen substituent.

**31.** The catalyst of Claim 8 wherein said heterocyclic nitrogen-containing compound is an indolazine compound represented by the following formula XXI

Formula XXI.

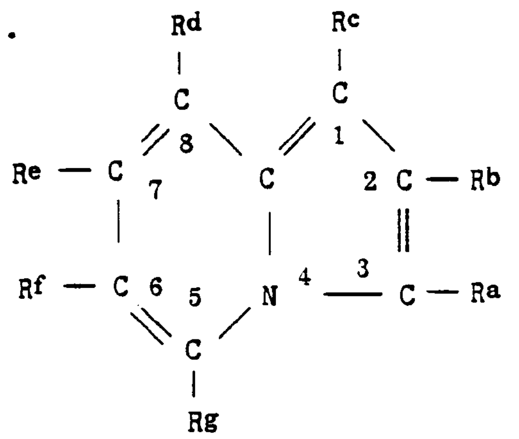

wherein each $R^a$, $R^b$, $R^c$, $R^d$, $R^e$, $R^f$ and $R^g$ is independently hydrogen, or a hydrocarbyl group having from 1 to 18 carbon atoms or such hydrocarbyl groups containing an oxygen, sulfur, cyano or halogen substituent.

**32.** The catalyst of Claim 8 wherein said heterocyclic nitrogen-containing compound is a phenazine compound represented by the following formula XXII

Formula XXII.

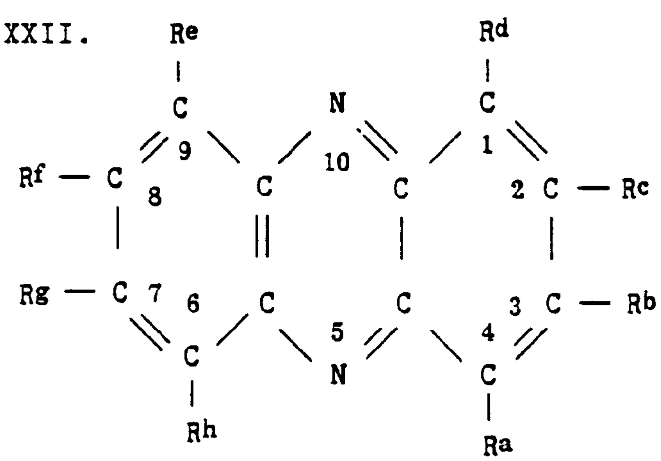

wherein each $R^a$, $R^b$, $R^c$, $R^d$, $R^e$, $R^f$, $R^g$ and $R^h$ is independently hydrogen, or a hydrocarbyl group having from 1 to 18 carbon atoms or such hydrocarbyl groups containing an oxygen, sulfur, cyano or halogen substituent.

**33.** The catalyst of Claim 8 wherein said heterocyclic nitrogen-containing compound is a phenarsazine compound represented by the following formula XXIII

Formula XXIII

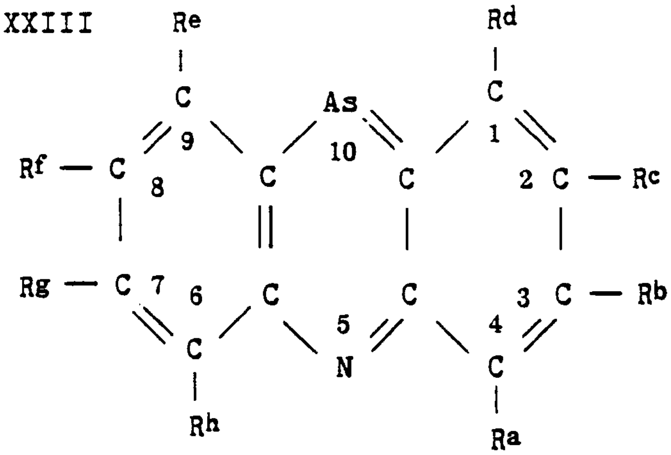

wherein each $R^a$, $R^b$, $R^c$, $R^d$, $R^e$, $R^f$, $R^g$ and $R^h$ is independently hydrogen, or a hydrocarbyl group having from 1 to 18 carbon atoms or such hydrocarbyl groups containing an oxygen, sulfur, cyano or halogen substituent.

**34.** The catalyst of Claim 8 wherein said heterocyclic nitrogen-containing compound is a phenothiazine compound represented by the following formula XXIV

Formula XXIV.

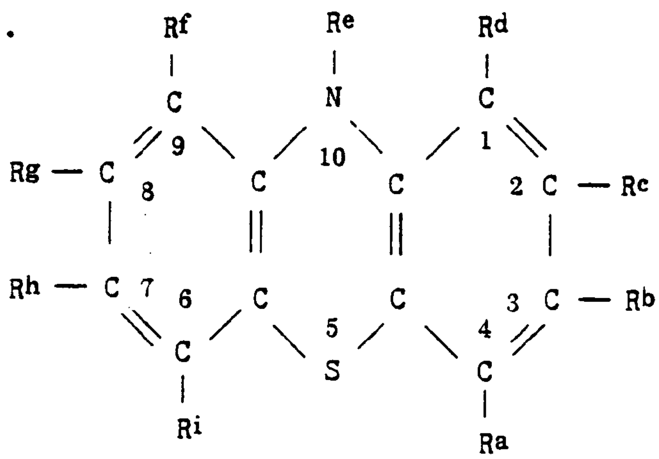

wherein each $R^a$, $R^b$, $R^c$, $R^d$, $R^e$, $R^f$, $R^g$, $R^h$ and $R^i$ is independently hydrogen, or a hydrocarbyl group having from 1 to 18 carbon atoms or such hydrocarbyl groups containing an oxygen, sulfur, cyano or halogen substituent.

**35.** The catalyst of Claim 8 wherein said heterocyclic nitrogen-containing compound is a pyrroline compound represented by the following formula XXV

Formula XXV.

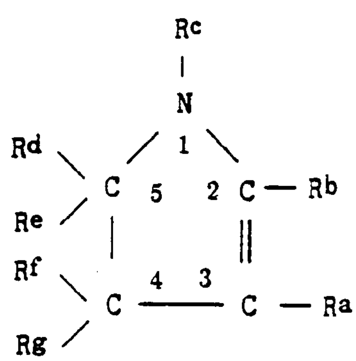

wherein each $R^a$, $R^b$, $R^c$, $R^d$, $R^e$, $R^f$ and $R^g$ is independently hydrogen, or a hydrocarbyl group having from 1 to 18 carbon atoms or such hydrocarbyl groups containing an oxygen, sulfur, cyano or halogen substituent.

**36.** The catalyst of Claim 8 wherein said heterocyclic nitrogen-containing compound is an indoline compound represented by the following formula XXVI

Formula XXVI.

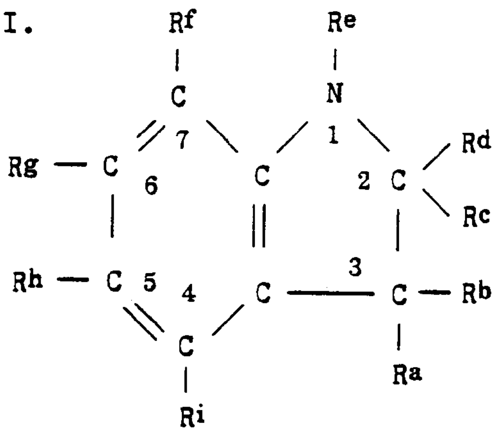

wherein each $R^a$, $R^b$, $R^c$, $R^d$, $R^e$, $R^f$, $R^g$, $R^h$ and $R^i$ is independently hydrogen, or a hydrocarbyl group having from 1 to 18 carbon atoms or such hydrocarbyl groups containing an oxygen, sulfur, cyano or halogen substituent.

**37.** The catalyst of Claim 8 wherein said heterocyclic nitrogen-containing compound is a piperidine compound represented by the following formula XXVII

Formula XXVII

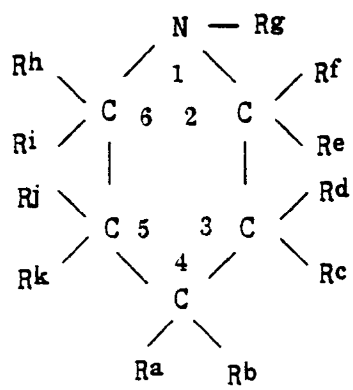

wherein each $R^a$, $R^b$, $R^c$, $R^d$, $R^e$, $R^f$, $R^g$, $R^h$, $R^i$, $R^j$ and $R^k$ is independently hydrogen, or a hydrocarbyl group having from 1 to 18 carbon atoms or such hydrocarbyl groups containing an oxygen, sulfur, cyano or halogen substituent.

**38.** The catalyst of Claim 8 wherein said heterocyclic nitrogen-containing compound is a piperazine compound represented by the following formula XXVIII

Formula XXVIII

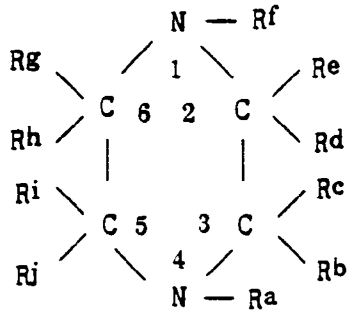

wherein each $R^a$, $R^b$, $R^c$, $R^d$, $R^e$, $R^f$, $R^g$, $R^h$, $R^i$ and $R^j$ is independently hydrogen, or a hydrocarbyl group having from 1 to 18 carbon atoms or such hydrocarbyl groups containing an oxygen, sulfur, cyano or halogen substituent.